# EUROPEAN PATENT SPECIFICATION

(11) **EP 3 835 325 B1**
(45) Date of publication and mention of the grant of the patent: **12.06.2024**
(21) Application number: 20212425.1
(22) Date of filing: 08.12.2020
(51) Int. Cl.: C08C 19/22, C08C 19/25, C08C 19/28, C08C 19/44, C08F 236/10, C08L 15/00, C08K 3/36, C08K 3/04

(54) **PRODUCTION METHOD FOR MODIFIED CONJUGATED DIENE-BASED POLYMER, MODIFIED CONJUGATED DIENE-BASED POLYMER, RUBBER COMPOSITION, PRODUCTION METHOD FOR RUBBER COMPOSITION, AND PRODUCTION METHOD FOR TIRE**
VERFAHREN ZUR HERSTELLUNG EINES MODIFIZIERTEN KONJUGIERTEN DIENBASIERTEN POLYMERS, MODIFIZIERTES KONJUGIERTES DIENBASIERTES POLYMER, KAUTSCHUKZUSAMMENSETZUNG, HERSTELLUNGSVERFAHREN FÜR KAUTSCHUKZUSAMMENSETZUNG UND HERSTELLUNGSVERFAHREN FÜR REIFEN
PROCÉDÉ DE PRODUCTION DE POLYMÈRE À BASE DE DIÈNE CONJUGUÉ MODIFIÉ, COMPOSITION DE CAOUTCHOUC, PNEUMATIQUE, POLYMÈRE À BASE DE DIÈNE CONJUGUÉ MODIFIÉ, COMPOSITION DE CAOUTCHOUC, PROCÉDÉ DE PRODUCTION DE COMPOSITION DE CAOUTCHOUC, ET PROCÉDÉ DE PRODUCTION DE PNEUMATIQUE

(30) Priority: 12.12.2019 JP 2019224387; 10.02.2020 JP 2020020291; 20.10.2020 JP 2020176220
(43) Date of publication of application: 16.06.2021
(73) Proprietor: Asahi Kasei Kabushiki Kaisha, Tokyo 1000006 (JP)
(72) Inventor: HISAMURA, Kenta, Tokyo, 1000006 (JP); SUMITANI, Shogo, Tokyo, 1000006 (JP); SEKIKAWA, Shinichi, Tokyo, 1000006 (JP); ARAKI, Yoshifumi, Tokyo, 1000006 (JP)
(74) Representative: Strehl Schübel-Hopf & Partner

(56) References cited:
- EP-A1- 3 476 866
- WO-A1-2017/019878
- CN-A- 110 105 495

## Description

### Technical Field

The present invention relates to a production method for a modified conjugated diene-based polymer, a modified conjugated diene-based polymer, a rubber composition, a production method for a rubber composition, and a production method for a tire.

### Background Art

There have been increasing demands for reduction of fuel consumption in vehicles from the viewpoint of an environmental load. In particular, a vehicle tire is required to be improved for low fuel consumption in a material used for a tread portion in direct contact with the ground.

Recently, development of a material having low rolling resistance, namely, having a low hysteresis loss property, has been demanded.

Besides, weight reduction of a tire is required, and it is required to reduce the thickness of a tire tread portion, and to use a material having high abrasion resistance for the tire tread portion.

On the other hand, a material used for the tire tread portion is required, from the viewpoint of safety, to be excellent in wet skid resistance and have practically sufficient fracture performance.

An example of a material meeting the aforementioned various requirements includes a rubber material containing a rubber-like polymer and a reinforcing filler such as carbon black or silica.

When a rubber material containing silica is used, balance between a low hysteresis loss property (an index of low fuel consumption) and wet skid resistance can be improved. Besides, dispersibility of silica in a rubber material is improved through introduction of a functional group having affinity or reactivity with silica into a molecular end of a rubber-like polymer having high mobility, and in addition, the mobility of the molecular end of the rubber-like polymer is reduced through a bond to a silica particle, and thus, a hysteresis loss can be reduced.

On the other hand, as a method for improving abrasion resistance, a method in which the molecular weight of a rubber-like polymer is increased can be employed. When the molecular weight is increased, however, processability in kneading a rubber-like polymer and a reinforcing filler tends to be deteriorated.

In consideration of these circumstances, an attempt has been made to introduce a branch structure into a rubber-like polymer in order to increase the molecular weight without impairing the processability.

For example, a resin composition of a modified conjugated diene-based polymer and silica obtained by reacting alkoxysilane having an amino group with an active end of a conjugated diene-based polymer has been conventionally proposed.

In addition, a modified conjugated diene-based polymer into which a branch structure has been introduced obtained through a coupling reaction between a polymer active end and a polyfunctional silane compound has been proposed (see, for example, Patent Documents 1 and 2). EP 3 476 866 A1 discloses a modified conjugated diene-based polymer, which is obtained by reacting the active end of a conjugated diene-based polymer with a compound [M] having a total of two or more groups of a group "-C(R¹)=N-A¹" and/or a group "-N=C(R¹)-A¹", wherein R¹ represents a hydrogen atom or a hydrocarbyl group, and A¹ represents a monovalent group having an alkoxysilyl group.

### List of Prior Art Documents

### Patent Document

Patent Document 1: International Publication No. WO2007/114203
Patent Document 2: International Publication No. WO2016/133154

### Summary of Invention

### Problems to be Solved by Invention

In the method for introducing a branch structure into a conjugated diene-based polymer in which a coupling reaction is caused between a polymer active end and a polyfunctional silane compound, however, a branch number of a modified conjugated diene-based polymer thus obtained largely depends on the number of groups of the polyfunctional silane compound reactable with the polymer active end, and does not exceed the number of the reactable groups. From the viewpoint of synthesizability, there is a limit in the number of reactable groups that can be imparted to one polyfunctional silane, and hence, there arises a problem that there is a limit in the branch number of the modified conjugated diene-based polymer to be obtained.

Therefore, an object of the present invention is to provide a production method for a modified conjugated diene-based polymer by which a modified conjugated diene-based polymer having a larger branch number can be produced than in a case where a branch structure is introduced into a conjugated diene-based polymer by using a modifier alone, and in which polymer design freedom is so high that the lengths of a main chain and a side chain can be adjusted, whereby providing a modified conjugated diene-based polymer excellent in processability and abrasion resistance.

### Means for Solving Problems

The present inventors have made earnest studies to solve the above-described problems of the related art, resulting in finding that the above-described conventional problems can be solved by reacting a conjugated diene-based polymer having an active end with a styrene derivative used as a branching agent, and further with a specific modifier, and thus, the present invention has been accomplished.

Specifically, the present invention is defined in the appended claims.

### Advantages of Invention

According to the present invention, it is possible to provide a production method by which a modified conjugated diene-based polymer having a larger branch number can be produced than in a case using a modifier alone, and in which polymer design freedom is so high that the lengths of a main chain and a side chain can be adjusted, and as a result, a modified conjugated diene-based polymer exhibiting excellent processability and abrasion resistance can be provided.

### Mode for Carrying Out Invention

Hereinafter, the mode for carrying out the present invention (hereinafter, referred to as the "present embodiment") will be described in detail.

It is noted that the following present embodiment is merely an example for describing the present invention and the present invention is not limited to the following description but may be variously modified within the scope thereof.

### [Production Method for Modified Conjugated Diene-based Polymer]

A production method for a modified conjugated diene-based polymer according to the present embodiment includes the steps defined in claim 1.

The conjugated diene-based polymer contained in a modified conjugated diene-based polymer may be any one of a homopolymer of a single conjugated diene compound, a polymer, namely, a copolymer, of different kinds of conjugated diene compounds, and a copolymer of a conjugated diene compound and an aromatic vinyl compound.

According to the present embodiment, a production method by which a modified conjugated diene-based polymer having a larger branch number can be produced by introducing a branch point into a main chain than in a case where a branch structure is introduced into a conjugated diene-based polymer by using a modifier alone, and in which polymer design freedom is so high that lengths of a main chain and a side chain can be adjusted can be provided, and as a result, a modified conjugated diene-based polymer exhibiting excellent processability and abrasion resistance can be provided.

### (Polymerizing Step)

In the polymerizing step of the production method for the modified conjugated diene-based polymer of the present embodiment, a conjugated diene-based polymer having an active end is obtained by polymerizing or copolymerizing a conjugated diene compound or a conjugated diene compound and an aromatic vinyl compound with an alkali metal compound or an alkaline earth metal compound used as a polymerization initiator.

In the polymerizing step, the polymerization is performed preferably by a growth reaction by a living anionic polymerization reaction, and thus, a conjugated diene-based polymer having an active end can be obtained.

### <Polymerization Initiator>

As the polymerization initiator, an alkali metal compound or an alkaline earth metal compound is used.

As the polymerization initiator, an organic lithium-based compound is preferably used, and an organomonolithium compound is more preferably used.

Examples of the organomonolithium compound include, but are not limited to, an organomonolithium compound of a low molecular weight compound, and an organomonolithium compound of a soluble oligomer.

As the organomonolithium compound, with respect to a bonding mode between an organic group and lithium thereof, any one of, for example, a compound having a carbon-lithium bond, a compound having a nitrogen-lithium bond, and a compound having a tin-lithium bond can be used.

An amount of the polymerization initiator to be used is preferably determined on the basis of the molecular weight of a target conjugated diene-based polymer.

A ratio of the amount of a monomer such as a conjugated diene compound to be used to the amount of the polymerization initiator to be used relates to the degree of polymerization of the target conjugated diene-based polymer. In other words, there is a tendency that it relates to the number average molecular weight and/or the weight average molecular weight.

Accordingly, in order to increase the molecular weight of the conjugated diene-based polymer, adjustment may be made to reduce the amount of the polymerization initiator, and in order to reduce the molecular weight, the adjustment may be made to increase the amount of the polymerization initiator.

From the viewpoint that it is used as one method for introducing a nitrogen atom into a conjugated diene-based polymer, the organomonolithium compound is preferably an alkyl lithium compound having a substituted amino group or dialkylamino lithium.

If such a compound is used as the polymerization initiator, a conjugated diene-based polymer having, at a polymerization starting end, a nitrogen atom of an amino group is obtained.

The substituted amino group refers to an amino group having no active hydrogen or having a structure in which active hydrogen is protected.

Examples of an alkyl lithium compound containing an amino group having no active hydrogen include, but are not limited to, 3-dimethylaminopropyl lithium, 3-diethylaminopropyl lithium, 4-(methylpropylamino)butyl lithium and 4-hexamethyleneiminobutyl lithium.

Examples of an alkyl lithium compound containing an amino group having a structure in which active hydrogen is protected include, but are not limited to, 3-bistrimethylsilylaminopropyl lithium and 4-trimethylsilylmethylaminobutyl lithium.

Examples of the dialkylamino lithium include, but are not limited to, lithium dimethylamide, lithium diethylamide, lithium dipropylamide, lithium dibutylamide, lithium di-n-hexylamide, lithium diheptylamide, lithium diisopropylamide, lithium dioctylamide, lithium-di-2-ethylhexylamide, lithium didecylamide, lithium ethylpropylamide, lithium ethylbutylamide, lithium ethylbenzylamide, lithium methylphenetylamide, lithium hexamethyleneimide, lithium pyrrolidide, lithium piperidide, lithium heptamethyleneimide, lithium morpholide, 1-lithioazacyclooctane, 6-lithio-1,3,3-trimethyl-6-azabicyclo[3.2.1] octane, and 1-lithio-1,2,3,6-tetrahydropyridine.

Such an organomonolithium compound having a substituted amino group can be reacted with a small amount of a polymerizable monomer, such as 1,3-butadiene, isoprene or styrene, to be used as an organomonolithium compound of an oligomer soluble in normal hexane or cyclohexane.

From the viewpoint of the industrial availability and the controllability of the polymerization reaction, the organomonolithium compound is preferably an alkyl lithium compound. In this case, a conjugated diene-based polymer having an alkyl group at a polymerization starting end can be obtained.

Examples of the alkyl lithium compound include, but are not limited to, n-butyllithium, sec-butyllithium, tert-butyllithium, n-hexyllithium, benzyllithium, phenyllithium, and stilbene lithium.

From the viewpoint of the industrial availability and the controllability of the polymerization reaction, the alkyl lithium compound is preferably n-butyllithium or sec-butyllithium.

One of these organomonolithium compounds may be singly used, or two or more of these may be used together. Alternatively, another organic metal compound may be used together.

Examples of such another organic metal compound include alkaline earth metal compounds, other alkaline metal compounds, and other organic metal compounds.

Examples of the alkaline earth metal compounds include, but are not limited to, organic magnesium compounds, organic calcium compounds and organic strontium compounds. Other examples include compounds of alkoxides, sulfonates, carbonates and amides of alkaline earth metals.

Examples of the organic magnesium compounds include dibutyl magnesium and ethyl butyl magnesium.

Examples of the other organic metal compounds include organic aluminum compounds.

Examples of a polymerization reaction mode employed in the polymerizing step include, but are not limited to, batch and continuous polymerization reaction modes.

In the continuous mode, one reactor or two or more connected reactors can be used. As a reactor for the continuous mode, for example, a tank or tubular reactor equipped with a stirrer can be used. In the continuous mode, preferably, a monomer, an inert solvent and a polymerization initiator are continuously fed to the reactor, a polymer solution containing a polymer is obtained in the reactor, and the polymer solution is continuously discharged.

As a reactor for the batch mode, for example, a tank reactor equipped with a stirrer is used. It is preferable, in the batch mode, that a monomer, an inert solvent and a polymerization initiator are fed to the reactor, the monomer is continuously or intermittently additionally fed if necessary during the polymerization, a polymer solution containing a polymer is obtained in the reactor, and the polymer solution is discharged after completing the polymerization.

In the production method for the modified conjugated diene-based polymer of the present embodiment, in order to obtain a conjugated diene-based polymer having an active end at a high ratio in the polymerizing step, the continuous mode in which a polymer is continuously discharged to be supplied to a next reaction in a short period of time is preferably employed. In the continuous mode, the number of reactors is not particularly limited, and one reactor or two or more connected reactors can be used. A reactor capable of obtaining a sufficient contact between a monomer and a polymerization initiator in a solution is preferably used, and a tank or tubular reactor equipped with a stirrer is used. The number of reactors can be appropriately selected, and one reactor is preferably used from the viewpoint of saving space in a manufacturing facility, or two or more reactors are preferably used from the viewpoint of improving productivity. When two or more reactors are used, it is more preferable that the branching agent is added in a second or following reactor.

The polymerizing step for the conjugated diene-based polymer is performed preferably in an inert solvent.

Examples of the inert solvent include hydrocarbon-based solvents such as saturated hydrocarbons and aromatic hydrocarbons. Specific examples of the hydrocarbon-based solvent include, but are not limited to, aliphatic hydrocarbons such as butane, pentane, hexane and heptane; alicyclic hydrocarbons such as cyclopentane, cyclohexane, methylcyclopentane and methylcyclohexane; aromatic hydrocarbons such as benzene, toluene and xylene; and a hydrocarbon containing a mixture of any of these.

Impurities of allenes and acetylenes are preferably treated with an organic metal compound before the solvent is supplied to the polymerization reaction because thus, a conjugated diene-based polymer having an active end in a high concentration tends to be obtained, and a modified conjugated diene-based polymer having a high modification ratio tends to be obtained.

In the polymerizing step, a polar compound (a polar material) may be added. Thus, an aromatic vinyl compound can be randomly copolymerized with a conjugated diene compound. In addition, the polar compound tends to function also as a vinylation agent for controlling a microstructure of a conjugated diene portion. Besides, it tends to be advantageous for, for example, acceleration of the polymerization reaction.

Examples of the polar compound include, but are not limited to, ethers such as tetrahydrofuran, diethyl ether, dioxane, ethylene glycol dimethyl ether, ethylene glycol dibutyl ether, diethylene glycol dimethyl ether, diethylene glycol dibutyl ether, dimethoxybenzene, and 2,2-bis(2-oxolanyl)propane; tertiary amine compounds such as tetramethylethylenediamine, dipiperidinoethane, trimethylamine, triethylamine, pyridine, and quinuclidine; alkali metal alkoxide compounds such as potassium-tert-amylate, potassium-tert-butylate, sodium-tert-butylate, and sodium amylate; and phosphine compounds such as triphenylphosphine.

One of these polar compounds may be singly used, or two or more of these may be used together.

The amount of the polar compound to be used is not particularly limited but can be selected in accordance with the purpose or the like, and is preferably 0.01 mol or more and 100 mol or less per mole of the polymerization initiator.

Such a polar compound (a vinylation agent) can be used, as a microstructure modifier for a conjugated diene portion of the conjugated diene-based polymer, in an appropriate amount in accordance with a desired amount of bound vinyl.

There is a tendency that many polar compounds simultaneously have an effective randomizing effect in copolymerization of a conjugated diene compound and an aromatic vinyl compound, and can be used as a modifier for the distribution of the aromatic vinyl compound and the amount of a styrene block.

As a method for randomizing the conjugated diene compound and the aromatic vinyl compound, for example, a method as described in Japanese Patent Laid-Open No. 59-140211 in which a copolymerization reaction is started with the whole amount of styrene and a part of 1,3-butadiene with the rest of 1,3-butadiene intermittently added during the copolymerization reaction may be employed.

In the polymerizing step, a polymerization temperature is preferably a temperature at which living anionic polymerization proceeds, and from the viewpoint of productivity, is more preferably 0°C or more and 120°C or less.

If the polymerization temperature falls in this range, there is a tendency that a reaction amount of the modifier reacted to the active end can be sufficiently attained after completing the polymerization. The polymerization temperature is further preferably 50°C or more and 100°C or less.

### (Branching Step)

In the production method for the modified conjugated diene-based polymer of the present embodiment, a styrene derivative is reacted, as a branching agent, with the active end of the conjugated diene-based polymer obtained in the polymerizing step.

While the branching agent is being polymerized with a monomer with the polymerization activity retained, an active end of another polymer chain is reacted with a functional group of the branching agent, and thus, a branch structure is formed in the polymer.

It is possible to form another branch structure by polymerizing and reacting the conjugated diene-based polymer in which the branch structure has been thus introduced further with a monomer and the branching agent, and as described later, a modified conjugated diene-based polymer can be obtained through a reaction with a modifier having a functional group, or a polymer chain can be further elongated through a coupling reaction.

In this manner, when a styrene derivative that has a functional group reacting with the active end of the polymer while continuing the polymerization reaction as an aromatic vinyl compound is used as the branching agent, a branched conjugated diene-based polymer can be obtained.

### <Branching Agent>

From the viewpoint of suppressing a chain transfer reaction, suppressing deactivation of the active end and preventing gelation, a branching agent represented by the following formula (1) having a styrene skeleton as a main skeleton, or the following formula (2) having a diphenylethylene skeleton as a main skeleton is used. 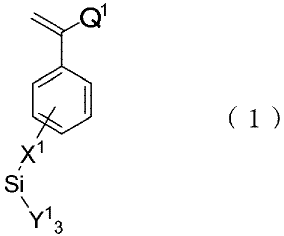 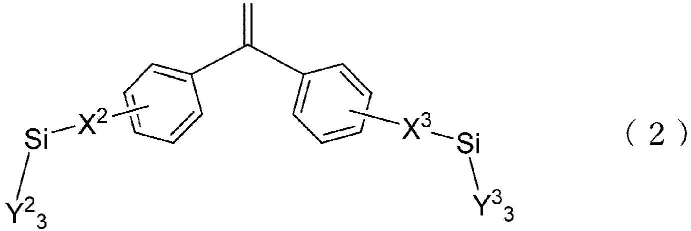
wherein Q¹ represents any one selected from the group consisting of a hydrogen atom, an alkyl group having 1 to 20 carbon atoms, and an aryl group having 6 to 20 carbon atoms, and may have a branch structure in a part thereof;
X¹, X² and X³ represent a single bond, or an organic group containing any one selected from the group consisting of carbon, hydrogen, nitrogen, sulfur, and oxygen;
Y¹, Y², and Y³ represent any one selected from the group consisting of an alkyl group having 1 to 20 carbon atom, an alkoxy group having 1 to 20 carbon atoms, and a halogen atom, are respectively independent, and may be the same or different.

In the styrene derivative used as the branching agent in the branching step, from the viewpoint of improving the branch number in the polymerization, it is preferable that Q¹ is a hydrogen atom and Y¹ is any one selected from the group consisting of an alkyl group having 1 to 20 carbon atoms, an alkoxy group having 1 to 20 carbon atoms, and a halogen atom in the formula (1).

Alternatively, in the present embodiment, in the styrene derivative used as the branching agent in the branching step, from the viewpoint of improving the branch number, it is preferable that Y² is any one selected from the group consisting of an alkyl group having 1 to 20 carbon atoms, an alkoxy group having 1 to 20 carbon atoms, and a halogen atom in the formula (2).

In the present embodiment, in the styrene derivative used as the branching agent in the branching step, from the viewpoints of the continuity of the polymerization and improving the branch number, it is more preferable that Q¹ is a hydrogen atom and Y¹ is alkoxy group having 1 to 20 carbon atoms or a halogen atom in the formula (1) .

Alternatively, in the present embodiment, in the styrene derivative used as the branching agent in the branching step, from the viewpoints of the continuity of the polymerization and improving the branch number, it is more preferable that Y² is an alkoxy group having 1 to 20 carbon atoms or a halogen atom, and Y³ is an alkoxy group having 1 to 20 carbon atoms or a halogen atom in the formula (2).

In the present embodiment, in the styrene derivative used as the branching agent in the branching step, from the viewpoints of the continuity of the polymerization, improving the branch number, and improving a modification ratio, it is further preferable that Q¹ is a hydrogen atom and Y¹ is an alkoxy group having 1 to 20 carbon atoms in the formula (1).

In the present embodiment, in the styrene derivative used as the branching agent in the branching step, from the viewpoints of the continuity of the polymerization, improving the branch number, and further improving the modification ratio, it is still further preferable that Q¹ is a hydrogen atom, X¹ is a single bond, and Y¹ is an alkoxy group having 1 to 20 carbon atoms in the formula (1) .

In the present embodiment, in the styrene derivative used as the branching agent in the branching step, from the viewpoints of the continuity of the polymerization, improving the branch number, and further improving the modification ratio, it is still further preferable that X² is a single bond, Y² is an alkoxy group having 1 to 20 carbon atoms or a halogen atom, X³ is a single bond, and Y³ is an alkoxy group having 1 to 20 carbon atoms or a halogen atom in the formula (2).

Examples of the branching agent represented by the formula (1) include, but are not limited to, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, trimethoxy(2-vinylphenyl)silane, triethoxy(2-vinylphenyl)silane, tripropoxy(2-vinylphenyl)silane, tributoxy(2-vinylphenyl)silane, triisopropoxy(2-vinylphenyl)silane, dimethoxymethyl(4-vinylphenyl)silane, diethoxymethyl(4-vinylphenyl)silane, dipropoxymethyl(4-vinylphenyl)silane, dibutoxymethyl(4-vinylphenyl)silane, diisopropoxymethyl(4-vinylphenyl)silane, dimethoxymethyl(3-vinylphenyl)silane, diethoxymethyl(3-vinylphenyl)silane, dipropoxymethyl(3-vinylphenyl)silane, dibutoxymethyl(3-vinylphenyl)silane, diisopropoxymethyl(3-vinylphenyl)silane, dimethoxymethyl(2-vinylphenyl)silane, diethoxymethyl(2-vinylphenyl)silane, dipropoxymethyl(2-vinylphenyl)silane, dibutoxymethyl(2-vinylphenyl)silane, diisopropoxymethyl(2-vinylphenyl)silane, dimethylmethoxy(4-vinylphenyl)silane, dimethylethoxy(4-vinylphenyl)silane, dimethylpropoxy(4-vinylphenyl)silane, dimethylbutoxy(4-vinylphenyl)silane, dimethylisopropoxy(4-vinylphenyl)silane, dimethylmethoxy(3-vinylphenyl)silane, dimethylethoxy(3-vinylphenyl)silane, dimethylpropoxy(3-vinylphenyl)silane, dimethylbutoxy(3-vinylphenyl)silane, dimethylisopropoxy(3-vinylphenyl)silane, dimethylmethoxy(2-vinylphenyl)silane, dimethylethoxy(2-vinylphenyl)silane, dimethylpropoxy(2-vinylphenyl)silane, dimethylbutoxy(2-vinylphenyl)silane, dimethylisopropoxy(2-vinylphenyl)silane, trimethoxy(4-isopropenylphenyl)silane, triethoxy(4-isopropenylphenyl)silane, tripropoxy(4-isopropenylphenyl)silane, tributoxy(4-isopropenylphenyl)silane, triisopropoxy(4-isopropenylphenyl)silane, trimethoxy(3-isopropenylphenyl)silane, triethoxy(3-isopropenylphenyl)silane, tripropoxy(3-isopropenylphenyl)silane, tributoxy(3-isopropenylphenyl)silane, triisopropoxy(3-isopropenylphenyl)silane, trimethoxy(2-isopropenylphenyl)silane, triethoxy(2-isopropenylphenyl)silane, tripropoxy(2-isopropenylphenyl)silane, tributoxy(2-isopropenylphenyl)silane, triisopropoxy(2-isopropenylphenyl)silane, dimethoxymethyl(4-isopropenylphenyl)silane, diethoxymethyl(4-isopropenylphenyl)silane, dipropoxymethyl(4-isopropenylphenyl)silane, dibutoxymethyl(4-isopropenylphenyl)silane, diisopropoxymethyl(4-isopropenylphenyl)silane, dimethoxymethyl(3-isopropenylphenyl)silane, diethoxymethyl(3-isopropenylphenyl)silane, dipropoxymethyl(3-isopropenylphenyl)silane, dibutoxymethyl(3-isopropenylphenyl)silane, diisopropoxymethyl(3-isopropenylphenyl)silane, dimethoxymethyl(2-isopropenylphenyl)silane, diethoxymethyl(2-isopropenylphenyl)silane, dipropoxymethyl(2-isopropenylphenyl)silane, dibutoxymethyl(2-isopropenylphenyl)silane, diisopropoxymethyl(2-isopropenylphenyl)silane, dimethylmethoxy(4-isopropenylphenyl)silane, dimethylethoxy(4-isopropenylphenyl)silane, dimethylpropoxy(4-isopropenylphenyl)silane, dimethylbutoxy(4-isopropenylphenyl)silane, dimethylisopropoxy(4-isopropenylphenyl)silane, dimethylmethoxy(3-isopropenylphenyl)silane, dimethylethoxy(3-isopropenylphenyl)silane, dimethylpropoxy(3-isopropenylphenyl)silane, dimethylbutoxy(3-isopropenylphenyl)silane, dimethylisopropoxy(3-isopropenylphenyl)silane, dimethylmethoxy(2-isopropenylphenyl)silane, dimethylethoxy(2-isopropenylphenyl)silane, dimethylpropoxy(2-isopropenylphenyl)silane, dimethylbutoxy(2-isopropenylphenyl)silane, dimethylisopropoxy(2-isopropenylphenyl)silane, trichloro(4-vinylphenyl)silane, trichloro(3-vinylphenyl)silane, trichloro(2-vinylphenyl)silane, tribromo(4-vinylphenyl)silane, tribromo(3-vinylphenyl)silane, tribromo(2-vinylphenyl)silane, dichloromethyl(4-vinylphenyl)silane, dichloromethyl(3-vinylphenyl)silane, dichloromethyl(2-vinylphenyl)silane, dibromomethyl(4-vinylphenyl)silane, dibromomethyl(3-vinylphenyl)silane, dibromomethyl(2-vinylphenyl)silane, dimethylchloro(4-vinylphenyl)silane, dimethylchloro(3-vinylphenyl)silane, dimethylchloro(2-vinylphenyl)silane, dimethylbromo(4-vinylphenyl)silane, dimethylbromo(3-vinylphenyl)silane, dimethylbromo(2-vinylphenyl)silane, trimethoxy(4-vinylbenzyl)silane, triethoxy(4-vinylbenzyl)silane, and tripropoxy(4-vinylbenzyl)silane.

Among these, trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(3-vinylphenyl)silane, triethoxy(3-vinylphenyl)silane, tripropoxy(3-vinylphenyl)silane, tributoxy(3-vinylphenyl)silane, triisopropoxy(3-vinylphenyl)silane, and trichloro(4-vinylphenyl)silane are preferred, and trimethoxy(4-vinylphenyl)silane, triethoxy(4-vinylphenyl)silane, tripropoxy(4-vinylphenyl)silane, tributoxy(4-vinylphenyl)silane, triisopropoxy(4-vinylphenyl)silane, trimethoxy(4-vinylbenzyl)silane, and triethoxy(4-vinylbenzyl)silane are more preferred, and trimethoxy(4-vinylphenyl)silane, and triethoxy(4-vinylphenyl)silane are further preferred.

Examples of the branching agent represented by the formula (2) include, but are not limited to, 1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, 1,1-bis(4-triisopropoxysilylphenyl)ethylene, 1,1-bis(3-trimethoxysilylphenyl)ethylene, 1,1-bis(3-triethoxysilylphenyl)ethylene, 1,1-bis(3-tripropoxysilylphenyl)ethylene, 1,1-bis(3-tripentoxysilylphenyl)ethylene, 1,1-bis(3-triisopropoxysilylphenyl)ethylene, 1,1-bis(2-trimethoxysilylphenyl)ethylene, 1,1-bis(2-triethoxysilylphenyl)ethylene, 1,1-bis(3-tripropoxysilylphenyl)ethylene, 1,1-bis(2-tripentoxysilylphenyl)ethylene, 1,1-bis(2-triisopropoxysilylphenyl)ethylene, 1,1-bis(4-(dimethylmethoxysilyl)phenyl)ethylene, 1,1-bis(4-(diethylmethoxysilyl)phenyl)ethylene, 1,1-bis(4-(dipropylmethoxysilyl)phenyl)ethylene, 1,1-bis(4-(dimethylethoxysilyl)phenyl)ethylene, 1,1-bis(4-(diethylethoxysilyl)phenyl)ethylene, 1,1-bis(4-(dipropylethoxysilyl)phenyl)ethylene, 1,1-bis(4-trimethoxysilylbenzyl)ethylene, 1,1-bis(4-triethoxysilylbenzyl)ethylene, 1,1-bis(4-tripropoxysilylbenzyl)ethylene, and 1,1-bis(4-tripentoxysilylbenzyl)ethylene.

Among these, 1,1-bis(4-trimethoxysilylphenyl)ethylene, 1,1-bis(4-triethoxysilylphenyl)ethylene, 1,1-bis(4-tripropoxysilylphenyl)ethylene, 1,1-bis(4-tripentoxysilylphenyl)ethylene, and 1,1-bis(4-triisopropoxysilylphenyl)ethylene are preferred, and 1,1-bis(4-trimethoxysilylphenyl)ethylene is more preferred.

The use of the branching agent represented by the formula (1) or (2) improved the branch number, and an effect of improving the abrasion resistance and the processability can be obtained.

In the production method for the modified conjugated diene-based polymer of the present embodiment, the timing of adding the branching agent is not particularly limited as long as it is during the polymerizing step when the conjugated diene-based polymer having an active end is present in the reaction system, but can be selected in accordance with the purpose or the like. From the viewpoints of improving an absolute molecular weight of the conjugated diene-based polymer and improving a coupling rate, the timing is timing, after adding the polymerization initiator, when a raw material conversion rate is preferably 20% or more, more preferably 40% or more, further preferably 50% or more, still further preferably 65% or more, and much further preferably 75% or more.

In or after the branching step, a monomer corresponding to a desired raw material may be additionally added to continue the polymerizing step after the branching, or the above-described process may be repeated.

The monomer to be additionally added is not particularly limited, but is preferably a conjugated diene compound and/or an aromatic vinyl compound. Particularly, when the monomer is additionally added in the branching step, from the viewpoint of the improvement of the modification ratio of the conjugated diene-based polymer by reducing steric hindrance at a branch point, an amount of the monomer is preferably 5% or more, more preferably 10% or more, further preferably 15% or more, still further preferably 20% or more, and much further preferably 25% or more based on the total amount of conjugated diene-based monomers, for example, the total amount of butadiene, used in the polymerizing step. In such a case, it is preferable, from the viewpoint of the improvement of the modification ratio, that the monomer is additionally added by continuous polymerization process in the branching step in an amount of 5% or more of the total amount of conjugated diene-based monomers, for example, the total amount of butadiene, used in the polymerizing step.

Since the lengths of a main chain and a side chain can be adjusted in accordance with the timing of adding the branching agent and the amount of the monomer to be additionally added, the polymer design freedom is high.

The branch structure of the conjugated diene-based polymer in which the branch structure has been introduced obtained in the branching step of the production method for the modified conjugated diene-based polymer of the present embodiment has preferably 3 branches or more and 24 branches or less, more preferably 4 branches or more and 20 branches or less, and further preferably 5 branches or more and 18 branches or less.

If the number of branches is 24 or less, there is a tendency that it is easy to obtain a modified conjugated diene-based polymer through a reaction with a modifier having a functional group in the modifying step described below, or to further elongate the polymer chain through a coupling reaction. Besides, if the number of branches is 3 or more, the resultant polymer tends to be excellent in processability and abrasion resistance.

An amount of the branching agent to be added is not particularly limited, but the amount to be added can be selected in accordance with the purpose or the like, and from the viewpoints of improvement of a rate of an end stopping reaction of the conjugated diene-based polymer, improvement of the coupling rate, and the continuity of the polymerization after branching, an amount of the branching agent is, in terms of a molar ratio to the amount of the active polymerization initiator, preferably 1/2 or less and 1/100 or more, more preferably 1/3 or less and 1/50 or more, further preferably 1/4 or less and 1/30 or more, further more preferably 1/6 or less and 1/25 or more, and still further preferably 1/8 or less and 1/12 or more.

Furthermore, in and/or after the branching step, a monomer may be further additionally added to continue the polymerizing step after the branching, or after the additional adding of the monomer, addition of the branching agent and the monomer may be repeated.

If the monomer is additionally added, steric hindrance around the branch point is reduced, and as a result, effects of improving the continuity of the polymerization and improving the coupling rate and the modification ratio can be obtained. Thus, with the molecular weight of the polymer increased, a branch can be formed in a desired position.

The monomer to be additionally added may be aromatic vinyl such as styrene, or a conjugated diene compound such as butadiene, or a mixture of these, and may be the same as or different from the monomer initially polymerized in the type and ratio, and from the viewpoint of the continuity of the polymerization, is preferably a conjugated diene compound. From the viewpoint of improving heat resistance of the polymer, an aromatic vinyl compound is preferably additionally added.

The conjugated diene-based polymer in which a branch structure has been introduced obtained in the branching step of the production method of the present embodiment has a Mooney viscosity, measured at 110°C, of preferably 10 or more and 150 or less, more preferably 15 or more and 140 or less, and further preferably 20 or more and 130 or less. The Mooney viscosity is still further preferably 30 or more and 100 or less.

If the Mooney viscosity falls in this range, a modified conjugated diene-based polymer ultimately obtained by the production method of the present embodiment tends to be excellent in processability and abrasion resistance.

The conjugated diene-based polymer in which a branch structure has been introduced obtained in the branching step of the production method of the present embodiment has a weight average molecular weight of preferably 10,000 or more and 1,500,000 or less, more preferably 100,000 or more and 1,000,000 or less, and further preferably 200,000 or more and 900,000 or less.

If the weight average molecular weight falls in this range, a modified conjugated diene-based polymer ultimately obtained by the production method of the present embodiment tends to be excellent in processability, abrasion resistance and balance between these characteristics.

If a modified conjugated diene-based polymer is produced in the modifying step described later, in order to attain a weight average molecular weight in a range of 100,000 or more and 1,000,000 or less, the amount of the branching agent to be added is controlled to a molar ratio to the amount of the polymerization initiator of 1/3 or less and 1/50 or more. Thus, it is necessary to prevent the polymerization initiator from being totally consumed before the modifying step while forming a branch, and to make the number of functional groups of the modifier two or more. In order to attain a weight average molecular weight in a range of 200,000 or more and 900,000 or less, it is necessary to control the amount of the branching agent to be added to be a molar ratio to the amount of the polymerization initiator of 1/3 or less and 1/50 or more, and to make the number of functional groups of the modifier three or more.

A modified conjugated diene-based polymer obtained by the production method of the present embodiment may be a polymer of a conjugated diene monomer and the branching agent, or may be a copolymer of a conjugated diene monomer, the branching agent, and another monomer.

For example, when the conjugated diene monomer is butadiene or isoprene, and this diene monomer is polymerized with a branching agent containing an aromatic vinyl portion, a polymer chain is what is called polybutadiene or polyisoprene, and a polymer containing a structure derived from an aromatic vinyl in a branched portion is obtained. Owing to such a structure, linearity of each polymer chain can be improved and a crosslink density obtained after vulcanization can be improved, resulting in obtaining an effect of improving the abrasion resistance of the polymer. Therefore, such a polymer is suitably used for a tire, resin modification, interior/exterior of a vehicle, an antivibration rubber, shoes and the like.

When the conjugated diene-based polymer is used in application to a tire tread, a copolymer of a conjugated diene monomer, an aromatic vinyl monomer, and a branching agent is suitably used, and in the copolymer used in this application, the amount of bound conjugated diene is preferably 40% by mass or more and 100% by mass or less, and more preferably 55% by mass or more and 80% by mass or less.

Besides, an amount of bound aromatic vinyl in a modified conjugated diene-based polymer obtained by the production method of the present embodiment is not particularly limited, and is preferably 0% by mass or more and 60% by mass or less, and more preferably 20% by mass or more and 45% by mass or less.

When the amounts of the bound conjugated diene and the bound aromatic vinyl fall in the above-described ranges, the balance between a low hysteresis loss property and wet skid resistance, abrasion resistance and fracture performance obtained when in the form of a vulcanizate tend to be more excellent.

Here, the amount of bound aromatic vinyl can be measured in accordance with UV absorption by a phenyl group, and based on the thus obtained amount, the amount of bound conjugated diene can be also obtained. Specifically, these amounts can be measured in accordance with a method described later in the examples.

In the modified conjugated diene-based polymer obtained by the production method of the present embodiment, the amount of bound vinyl in a conjugated diene bond unit is not particularly limited, and is preferably 10% by mol or more and 75% by mol or less, and more preferably 20% by mol or more and 65% by mol or less.

If the amount of bound vinyl falls in the above-described range, the balance between a low hysteresis loss property and wet skid resistance, abrasion resistance, and fracture strength obtained when in the form of a vulcanizate tend to be more excellent.

Here, if the modified conjugated diene-based polymer is a copolymer of butadiene and styrene, the amount of bound vinyl (the amount of a 1,2-bond) in a butadiene bond unit can be obtained by Hampton method (R. R. Hampton, Analytical Chemistry, 21, 923 (1949)). Specifically, it can be measured by a method described in the examples below.

As for the microstructure of the modified conjugated diene-based polymer, if the amounts of the aforementioned bonds in the modified conjugated diene-based polymer obtained by the production method of the present embodiment respectively fall in the above-described ranges and the glass transition temperature of the modified conjugated diene-based polymer is -80°C or more and -15°C or less, there is a tendency that a vulcanizate more excellent in the balance between a low hysteresis loss property and wet skid resistance can be obtained.

The glass transition temperature is defined as a peak top (an inflection point) of a DSC differential curve obtained by recording a DSC curve during temperature increase in a prescribed temperature range in accordance with ISO 22768:2006.

If the modified conjugated diene-based polymer obtained by the production method of the present embodiment is a conjugated diene-aromatic vinyl copolymer, it preferably contains a few or no blocks in which 30 or more aromatic vinyl units are chained. More specifically, if the modified conjugated diene-based polymer obtained by the production method of the present embodiment is a butadiene-styrene copolymer, in employing a known method in which the copolymer is decomposed by Kolthoff method (a method described by I. M. Kolthoff, et al., J. Polym. Sci. 1, 429 (1946)) to analyze the amount of polystyrene insoluble in methanol, blocks in each of which 30 or more aromatic vinyl units are chained are preferably 5.0% by mass or less, and more preferably 3.0% by mass or less based on the total amount of the modified conjugated diene-based polymer.

From the viewpoint of improving fuel efficiency, if the modified conjugated diene-based polymer obtained by the production method of the present embodiment is a conjugated diene-aromatic vinyl copolymer, a larger proportion of an aromatic vinyl unit is preferably present singly.

Specifically, if the modified conjugated diene-based polymer obtained by the production method of the present embodiment is a butadiene-styrene copolymer, when the modified conjugated diene-based polymer is decomposed by employing a method through ozonolysis known as a method of Tanaka et al., (Polymer, 22, 1721 (1981)) to analyze a styrene chain distribution by GPC, it is preferable that the amount of isolated styrene, based on the whole amount of bound styrene, is 40% by mass or more, and that the amount of a chain styrene structure consisting of 8 or more chained styrene is 5.0% by mass or less.

In this case, a resultant vulcanized rubber tends to attain excellent performance of particularly low hysteresis loss.

### (Modifying Step)

In the production method for the modified conjugated diene-based polymer of the present embodiment, the modifying step of reacting, with the prescribed compound [M], the active end of the conjugated diene-based polymer resulting from the polymerizing step and the branching step described above in which a branch structure has been introduced is performed.

The compound [M] is a compound having a total of two or more groups of a group "-CR¹=N-A¹" and/or a group "-N=C(R¹)-A¹". Hereinafter, these groups are also referred to as the "specific imino groups".

It is noted that R¹ represents a hydrogen atom or a hydrocarbyl group, and A¹ represents a monovalent group having an alkoxysilyl group.

Through this modifying step, a modified conjugated diene-based polymer that has a large number of branches in a polymer chain and has been modified with a group interactive with silica can be obtained.

In the specific imino groups, examples of the hydrocarbyl group represented by R¹ include an alkyl group having 1 to 20 carbon atoms, a cycloalkyl group having 3 to 20 carbon atoms, an alkenyl group having 2 to 20 carbon atoms, and an aryl group having 6 to 20 carbon atoms.

A¹ is not particularly limited in the structure as long as it has an alkoxysilyl group, and is preferably a group further having a methylene group or a polymethylene group, and more preferably, it has a methylene group, or a polymethylene group and an alkoxysilyl group, and is bonded to, at the methylene group or the polymethylene group, a nitrogen atom or a carbon atom forming a carbon-nitrogen double bond.

The number of the specific imino groups contained in the compound [M] may be 2 or more, and is preferably 2 to 6. It is noted that each of R¹ and A¹ contained in the compound [M] in a plural number may be the same or different.

As the compound [M], a compound represented by the following formula (A) is particularly preferred:

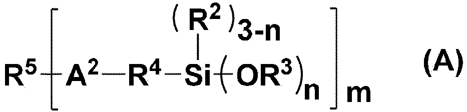

wherein R² and R³ each independently represent a hydrocarbyl group having 1 to 20 carbon atoms, R⁴ represents an alkanediyl group having 1 to 20 carbon atoms, and A² represents a group "*-C(R¹)=N-" or a group "*-N=C(R¹)-", wherein R¹ represents a hydrogen atom or a hydrocarbyl group, and a character "*" represents a point to attachment R⁵;
R⁵ represents an m-valent hydrocarbyl group having 1 to 20 carbon atoms, or an m-valent group having 1 to 20 carbon atoms that has at least one atom selected from the group consisting of a nitrogen atom, an oxygen atom and a sulfur atom, and does not have active hydrogen;
n is an integer of 1 to 3, and m is an integer of 2 to 10; and
each of R², R³, R⁴, A² and n, each present in a plural number, may be the same or different.

In the formula (A), examples of a hydrocarbyl group having 1 to 20 carbon atoms represented by R² or R³ include an alkyl group having 1 to 20 carbon atoms, an allyl group, a cycloalkyl group having 3 to 20 carbon atom, and aryl group having 6 to 20 carbon atoms.

R⁴ represents an alkanediyl group having 1 to 20 carbon atoms, and examples include a cycloalkylene group having 3 to 20 carbon atoms, and an arylene group having 6 to 20 carbon atoms. R⁴ is preferably of a straight-chain structure.

To R¹ contained in A², the description given above regarding the "specific imino groups" is applied. From the viewpoint of a high effect of improving silica dispersibility, n is preferably 2 or 3, and more preferably 3.

An example of an m-valent hydrocarbyl group represented by R⁵ includes a group obtained by removing m hydrogen atoms from a chain hydrocarbon having 1 to 20 carbon atoms, an alicyclic hydrocarbon having 3 to 20 carbon atoms, or an aromatic hydrocarbon having 6 to 20 carbon atoms. From the viewpoint of a high effect of improving abrasion resistance of a resultant vulcanized rubber, a group (an aromatic ring group) obtained by removing m hydrogen atoms from a ring portion of an aromatic hydrocarbon is preferred. Examples of the aromatic hydrocarbon include a ring structure represented by the following formula (A-2), and a polycyclic structure (such as a biphenyl group) formed by connecting two or more such ring structures.

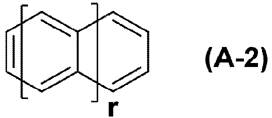

wherein r represents an integer of 0 to 5.

If R⁵ in the formula (A) is an m-valent group having 1 to 20 carbon atoms that has at least one atom selected from the group consisting of a nitrogen atom, an oxygen atom and a sulfur atom, and does not have active hydrogen, specific preferred examples include an m-valent heterocyclic group, and an m-valent group having a tertiary amine structure.

The heterocyclic group preferably has a conjugated system, and an example includes a group obtained by removing m hydrogen atoms from a single ring or a condensed ring such as pyridine, pyrimidine, pyrazine, quinoline, naphthalidine, furan, or thiophen, or a ring portion of a structure obtained by connecting a plurality of such single rings or condensed rings.

m represents an integer of 2 to 10.

From the viewpoint of processability of a rubber composition, m is preferably 2 to 6.

Herein, the term "active hydrogen" refers to a hydrogen atom bonded to an atom except for a carbon atom, and preferably refers to one having lower bonding energy than a carbon-hydrogen bond of polymethylene.

Examples of the compound [M] used in the modifying step include, but are not limited to, compounds respectively represented by the following formulas (M-1) to (M-23).

As the compound [M], one of these may be singly used, or two or more of these may be used in combination.

It is noted that R⁷ in the formula (M-11) represents a hydrogen atom or an alkyl group.

The compounds [M] represented by the following formulas (M-1) to (M-23) are used also in [Examples] and [Comparative Examples] described below.

### <Compound [M] used in Modifying Step: Formulas (M-1) to (M-23)>

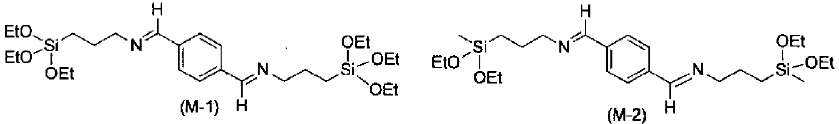

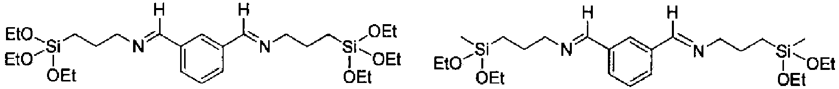

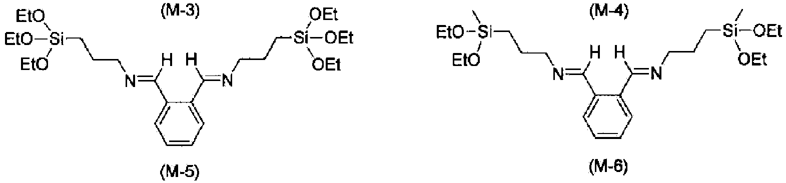

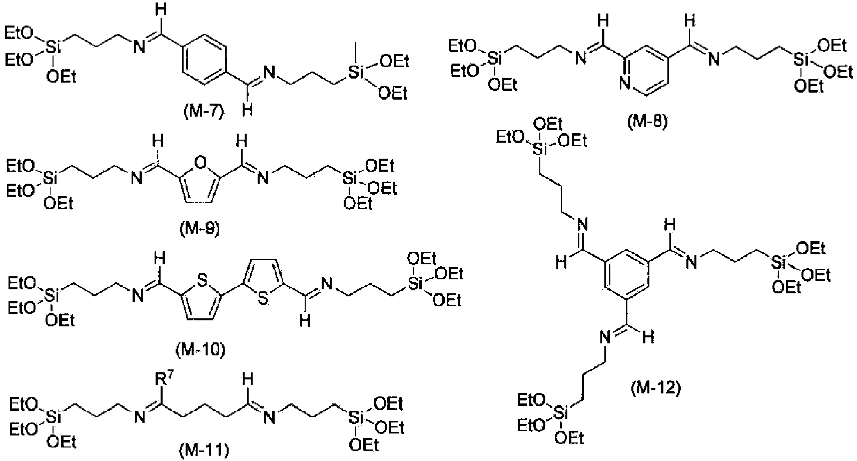

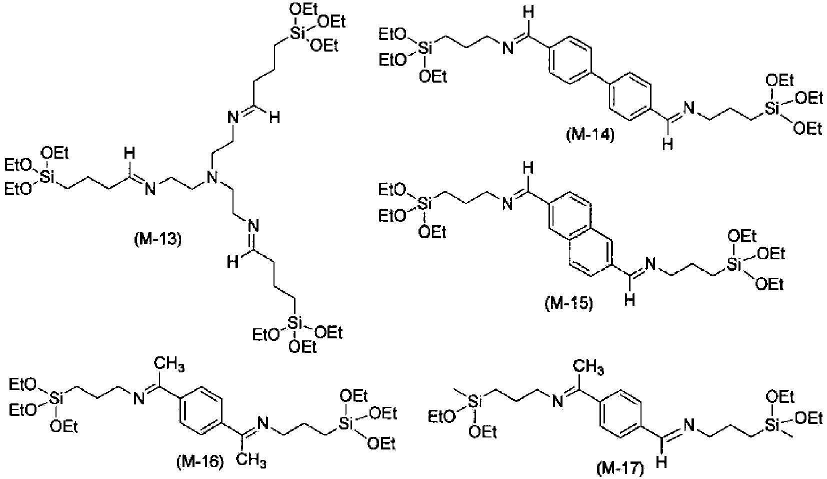

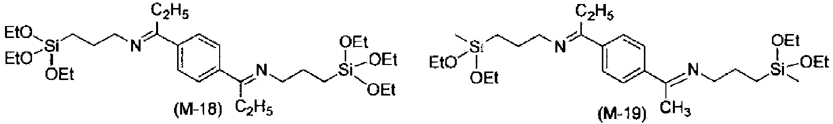

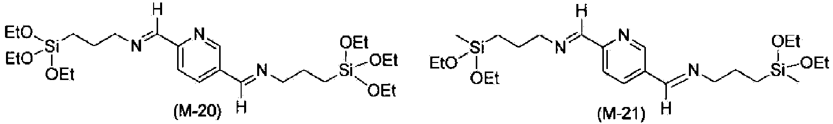

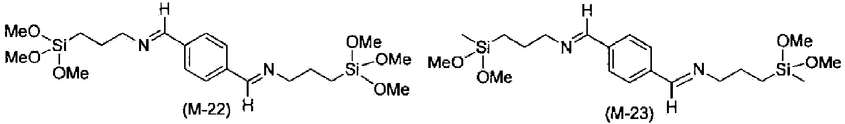

In the formulas (M-1) to (M-23), Et represents an ethyl group, and Me represents a methyl group.

The compound [M] can be synthesized by an appropriate combination of usual methods of organic chemistry. Examples of a method for obtaining the compound represented by the formula (A) include a method (i) in which a monofunctional amine compound having an alkoxysilyl group and R⁴ (such as 3-aminopropyltriethoxysilane or 3-aminopropylmethyldiethoxysilane) and a polyfunctional aldehyde compound having R⁵ (such as terephthalaldehyde, isophthalaldehyde, phthaldialdehyde, or 2,4-pyridinedicarboxyaldehyde) are subjected to dehydration condensation, and a method (ii) in which a polyfunctional amine compound having R⁵ (such as tris(2-aminoethyl)amine, or N,N'-bis(2-aminoethyl)methylamine) and a monofunctional type hydroxy group-containing compound having an alkoxysilyl group and R⁴ (such as 4-(triethoxysilyl)butanal) are subjected to dehydration condensation. Such a synthesis reaction is performed preferably in an appropriate organic solvent, and if necessary, in the presence of an appropriate catalyst.

It is noted that the method for synthesizing the compound [M] is not limited to the above-described methods.

A reaction between the conjugated diene-based polymer having an active end obtained in the branching step and the compound [M] can be performed as, for example, a solution reaction.

A ratio of the compound [M] to be used (a total amount when two or more compounds are used) is, from the viewpoint of causing a modification reaction to sufficiently proceed, preferably 0.01 mol or more, and more preferably 0.05 mol or more per mole of a metal atom involved in polymerization and contained in the polymerization initiator. An upper limit value is, for avoiding excessive addition, preferably less than 2.0 mol, and more preferably less than 1.5 mol per mole of the metal atom involved in the polymerization and contained in the polymerization initiator.

A temperature of the modification reaction is usually the same as that of the polymerization reaction, and is preferably -20°C to 150°C, and more preferably 0 to 120°C. If the reaction temperature is low, the viscosity of the polymer obtained after the modification tends to increase, and if the reaction temperature is high, the polymer active end is easily deactivated. A reaction time is preferably 1 minute to 5 hours, and more preferably 2 minutes to 1 hour.

In the reaction between the conjugated diene-based polymer having an active end obtained in the branching step and the compound [M], another modifier or coupling agent may be used together with the compound [M].

Another modifier or coupling agent is not particularly limited as long as it is a compound that can react with the active end of the conjugated diene-based polymer obtained through the polymerizing step and the branching step, and any compound known as a modifier or a coupling agent for a conjugated diene-based polymer can be used.

When another modifier or coupling agent is used, a use ratio is preferably 10% by mol or less, and more preferably 5% by mol or less.

The branch structure of the modified conjugated diene-based polymer obtained by the production method of the present embodiment through the polymerizing step, the branching step and the modifying step has preferably 8 branches or more and 36 branches or less, more preferably 10 branches or more and 24 branches or less, and further preferably 12 branches or more and 22 branches or less.

A total number of branch points in the modified conjugated diene-based polymer obtained by the production method of the present embodiment is preferably 2 or more, more preferably 3 or more, further preferably 4 or more, and much further preferably 5 or more.

If the branch structure and the total number of branch points fall in the above-described ranges, processability, low fuel consumption performance and abrasion resistance tend to be excellent.

If the branch structure of the modified conjugated diene-based polymer has 8 branches or more and 36 branches or less, in order to construct one having a total number of branch points of 2 or more and 15 or less, it is necessary to set a molar ratio of the branching agent to 1/2 or less and 1/100 or more of that of the polymerization initiator and to use a modifier having 3 or more functional groups.

If the branch structure has 8 branches or more and 36 branches or less, in order to construct one having a total number of branch points of 3 or more and 12 or less, it is preferable to set the molar ratio of the branching agent to 1/3 or less and 1/50 or more of that of the polymerization initiator and to use a modifier having 4 or more functional groups.

If the branch structure has 10 branches or more and 24 branches or less, in order to construct one having a total number of branch points of 4 or more and 10 or less, it is preferable to set the molar ratio of the branching agent to 1/6 or less and 1/25 or more of that of the polymerization initiator and to use a modifier having 5 or more functional groups.

If the branch structure has 12 branches or more and 20 branches or less, in order to construct one having a total number of branch points of 5 or more and 9 or less, it is preferable to set the molar ratio of the branching agent to 1/8 or less and 1/12 or more of that of the polymerization initiator and to use a modifier having 6 or more functional groups.

### (Modified Conjugated Diene-based Polymer)

A modified conjugated diene-based polymer of the present embodiment is a reaction product between a conjugated diene-based polymer having an active end and a branch structure, and a compound [M] having a total of two or more groups of a group "-CR¹=N-A¹" and/or a group "-N=CR¹-A¹", wherein R¹ represents a hydrogen atom or a hydrocarbyl group, and A¹ represents a monovalent group having an alkoxysilyl group, wherein the conjugated diene-based polymer having an active end and a branch structure is obtainable by reacting the active end of a conjugated diene-based polymer with a compound represented by the above-described formula (1) and/or the above-described formula (2).

The modified conjugated diene-based polymer of the present embodiment is preferably represented by the following formula (B): 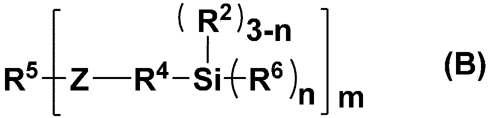
wherein R² represents a hydrocarbyl group having 1 to 20 carbon atoms, R⁶ represents a hydrocarbyloxy group having 1 to 20 carbon atoms, or a modified or unmodified branched conjugated diene-based polymer chain, R⁴ represents an alkanediyl group having 1 to 20 carbon atoms, and Z represents a group represented by the following formula (C) or (D);
R⁵ represents an m-valent hydrocarbyl group having 1 to 20 carbon atoms, or an m-valent group having 1 to 20 carbon atoms that has at least one atom selected from the group consisting of a nitrogen atom, an oxygen atom and a sulfur atom, and does not have active hydrogen;
n represents an integer of 1 to 3, and m represents an integer of 2 to 10; and
each of R², R⁴, R⁶, Z and n, each present in a plural number, may be the same or different.

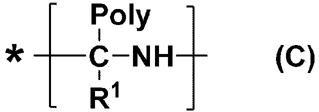

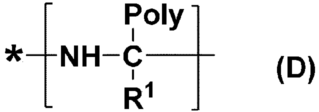

wherein R¹ represents a hydrogen atom or a hydrocarbyl group, Poly represents a modified or unmodified branched conjugated diene-based polymer; and a character "*" represents a point to attachment to R⁵.

In the formulas (B), (C) and (D), the description given above with respect to the formula (A) is applied to R¹, R², R⁴ and R⁵.

The hydrocarbyloxy group represented by R⁶ is preferably an ethoxy group or a methoxy group.

Each of a conjugated diene-based polymer chain represented by R⁶, and a conjugated diene-based polymer chain Poly in the formulas (C) and (D) is a structure corresponding to the conjugated diene-based polymer having an active end obtained in the polymerizing step. Each of these conjugated diene-based polymer chains may have, at an end thereof, a functional group interactive with silica.

### (Condensation Modification Step)

In the production method for the modified conjugated diene-based polymer of the present embodiment, a condensation modification step of performing a condensation reaction in the presence of a condensation accelerator may be performed after the modifying step or before the modifying step.

### (Hydrogenating Step)

In the production method for the modified conjugated diene-based polymer of the present embodiment, a hydrogenating step of hydrogenating a conjugated diene portion may be performed.

A method for hydrogenating the conjugated diene portion of the modified conjugated diene-based polymer of the present embodiment is not particularly limited, and any of known methods can be employed.

As a suitable hydrogenation method, a method in which the hydrogenation is performed by blowing gaseous hydrogen into the polymer solution in the presence of a catalyst can be employed.

Examples of the catalyst include, but are not limited to, heterogeneous catalysts such as a catalyst containing a noble metal supported on a porous inorganic substance; and homogenous catalysts such as a catalyst obtained by reacting a solubilized salt of nickel, cobalt or the like with organic aluminum or the like, and a catalyst using metallocene such as titanocene. Among these catalysts, from the viewpoint that a mild hydrogenation condition can be selected, a titanocene catalyst is preferably used. In addition, hydrogenation of an aromatic group can be performed by using a noble metal-supported catalyst.

Examples of the hydrogenation catalyst include, but are not limited to, (1) a supported heterogeneous hydrogenation catalyst obtained by supporting a metal such as Ni, Pt, Pd or Ru on carbon, silica, alumina or diatomite, (2) what is called a ziegler catalyst using an organic acid salt of Ni, Co, Fe, Cr or the like, or a transition metal salt such as acetylacetone salt, and a reducing agent such as organic aluminum, and (3) what is called an organic metal complex such as an organic metal compound of Ti, Ru, Rh or Zr. Furthermore, examples of the hydrogenation catalyst include, but are not particularly limited to, known hydrogenation catalysts described in, for example, Japanese Patent Publication No. 42-8704, Japanese Patent Publication No. 43-6636, Japanese Patent Publication No. 63-4841, Japanese Patent Publication No. 1-37970, Japanese Patent Publication No. 1-53851, Japanese Patent Publication No. 2-9041 and Japanese Patent Laid-Open No. 8-109219. A preferable hydrogenation catalyst is a reaction mixture of a titanocene compound and a reducing organic metal compound.

### (Step of Adding Deactivator and Neutralizer)

In the production method for the modified conjugated diene-based polymer of the present embodiment, a deactivator, a neutralizer or the like may be added, if necessary, to the polymer solution after the modifying step described above.

Examples of the deactivator include, but are not limited to, water; and alcohols such as methanol, ethanol and isopropanol.

Examples of the neutralizer include, but are not limited to, carboxylic acids such as stearic acid, oleic acid and versatic acid (a mixture of highly branched carboxylic acids having 9 to 11 carbon atoms, mainly 10 carbon atoms); and an aqueous solution of an inorganic acid, and a carbon dioxide gas.

### (Step of Adding Stabilizer for Rubber)

In the production method for the modified conjugated diene-based polymer of the present embodiment, from the viewpoints of preventing gel formation after the polymerization and of improving stability in the processing, a stabilizer for rubber is preferably added.

As the stabilizer for rubber, any of known stabilizers, not limited to the following, can be used, and preferable examples include antioxidants such as 2,6-di-tert-butyl-4-hydroxytoluene (hereinafter also referred to as BHT), n-octadecyl-3-(4'-hydroxy-3',5'-di-tert-butylphenol)propionate, and 2-methyl-4,6-bis[(octylthio)methyl]phenol.

### (Step of Adding Rubber Softener)

In the production method for the modified conjugated diene-based polymer of the present embodiment, a rubber softener may be added if necessary from the viewpoint of further improving productivity of the modified conjugated diene-based polymer and processability in obtaining a resin composition by blending a filler or the like.

The rubber softener is not particularly limited, and for example, an extender oil, a liquid rubber, a resin or the like can be used.

A preferable example of a method for adding the rubber softener to the modified conjugated diene-based polymer includes, but is not limited to, a method in which the rubber softener is added to a solution of the modified conjugated diene-based polymer, the resultant is mixed to obtain a polymer solution containing the rubber softener, and the resultant solution is desolvated.

Examples of the preferable extender oil include an aroma oil, a naphthenic oil and a paraffin oil. Among these oils, from the viewpoint of environmental safety, oil bleeding prevention and wet grip characteristics, an aroma-alternative oil containing 3% by mass or less of a polycyclic aromatic (PCA) component according to the IP 346 is preferred. Examples of the aroma-alternative oil include TDAE (Threated Distillate Aromatic Extracts), MES (Mild Extraction Solvate) and the like mentioned in Kautschuk Gummi Kunststoffe 52 (12) 799 (1999), and RAE (Residual Aromatic Extracts).

Examples of the preferable liquid rubber include, but are not limited to, liquid polybutadiene and liquid styrene-butadiene rubber.

As effects obtained by adding the liquid rubber, not only processability in forming a resin composition by blending the modified conjugated diene-based polymer and a filler or the like can be improved but also there is a tendency that abrasion resistance, a low hysteresis loss property and a low temperature characteristic obtained when in the form of a vulcanizate can be improved because a glass transition temperature of the resin composition can be shifted to a lower temperature.

Examples of a resin used as the rubber softener include, but are not limited to, an aromatic petroleum resin, a coumarone-indene resin, a terpene-based resin, a rosin derivative (including a wood oil resin), tall oil, a derivative of tall oil, a rosin ester resin, a natural or synthetic terpene resin, an aliphatic hydrocarbon resin, an aromatic hydrocarbon resin, a mixed aliphatic/aromatic hydrocarbon resin, a coumarin-indene resin, a phenol resin, a p-tert-butylphenol-acetylene resin, a phenol-formaldehyde resin, a xylene-formaldehyde resin, a monoolefin oligomer, a diolefin oligomer, a hydrogenated aromatic hydrocarbon resin, a cyclic aliphatic hydrocarbon resin, a hydrogenated hydrocarbon resin, a hydrocarbon resin, a hydrogenated wood oil resin, a hydrogenated oil resin, and an ester of a hydrogenated oil resin and a monofunctional or polyfunctional alcohol. One of these resins may be singly used, or two or more of these may be used together. When hydrogenated, all unsaturated groups may be hydrogenated, or some may be left not hydrogenated.

As effects obtained by adding the resin as the rubber softener, not only processability in forming a resin composition by blending the modified conjugated diene-based polymer and a filler or the like can be improved but also there is a tendency that fracture strength obtained when in the form of a vulcanizate can be improved, and in addition, there is a tendency that wet skid resistance can be improved because a glass transition temperature of the resin composition can be shifted to a higher temperature.

An amount of the extender oil, the liquid rubber, the resin or the like to be added as the rubber softener is not particularly limited, and is preferably 1 part by mass or more and 60 parts by mass or less, more preferably 5 parts by mass or more and 50 parts by mass or less, and further preferably 10 parts by mass or more and 37.5 parts by mass or less based on 100 parts by mass of the modified conjugated diene-based polymer obtained by the production method of the present embodiment.

If the rubber softener is added in an amount falling in this range, there is a tendency that processability obtained in the form of a resin composition by blending the modified conjugated diene-based polymer obtained by the production method of the present embodiment and a filler or the like is good, and that fracture strength and abrasion resistance when in the form of a vulcanizate are good.

### (Desolvating Step)

In the production method for the modified conjugated diene-based polymer of the present embodiment, any of known methods can be employed as a method for obtaining the resultant modified conjugated diene-based polymer from the polymer solution. Examples of the method include, but are not particularly limited to, a method in which the polymer is filtered after separating the solvent by steam stripping or the like, and the resultant is dehydrated and dried to obtain the polymer, a method in which the solution is concentrated in a flushing tank, and the resultant is devolatilized by using a bent extruder or the like, and a method in which the solution is directly devolatilized by using a drum dryer or the like.

### [Rubber Composition and Production Method for Rubber Composition]

A rubber composition of the present embodiment contains a rubber component containing 10% by mass or more of the modified conjugated diene-based polymer produced by the production method of the present embodiment described above, and 5.0 parts by mass or more and 150 parts by mass or less of a filler based on 100 parts by mass of the rubber component.

A production method for the rubber composition of the present embodiment includes a step of obtaining the modified conjugated diene-based polymer by the above-described production method, a step of obtaining a rubber component containing 10% by mass or more of the modified conjugated diene-based polymer, and a step of causing 5.0 parts by mass or more and 150 parts by mass or less of a filler to be contained based on 100 parts by mass of the rubber component.

The rubber component preferably contains 10% by mass or more of the modified conjugated diene-based polymer obtained by the production method of the present embodiment from the viewpoint of improvement of low fuel consumption performance, processability, and abrasion resistance.

The filler preferably contains a silica-based inorganic filler.

If a silica-based inorganic filler is dispersed as the filler in the rubber composition, the rubber composition tends to be more excellent in processability obtained when used for obtaining a vulcanizate and tends to be more excellent in abrasion resistance and fracture strength, and balance between a low hysteresis loss property and wet skid resistance when in the form of a vulcanizate.

Also when the rubber composition is to be used in application to a vulcanized rubber such as a tire, a vehicle component such as an anti-vibration rubber, or shoes, a silica-based inorganic filler is preferably contained.

The rubber composition of the present embodiment is obtained by mixing the rubber component containing 10% by mass or more of the modified conjugated diene-based polymer obtained by the above-described production method with the filler.

The rubber component may contain a rubber-like polymer different from the modified conjugated diene-based polymer described above (hereinafter simply referred to as the "rubber-like polymer").

Examples of such a rubber-like polymer include, but are not limited to, a conjugated diene-based polymer or a hydrogenated product thereof, a random copolymer of a conjugated diene-based compound and a vinyl aromatic compound, or a hydrogenated product thereof, a block copolymer of a conjugated diene-based compound and a vinyl aromatic compound, or a hydrogenated product thereof as well as a non-diene-based polymer and a natural rubber.

Examples of the rubber-like polymer include, but are not limited to, a butadiene rubber or a hydrogenated product thereof, an isoprene rubber or a hydrogenated product thereof, styrene-based elastomers such as a styrene-butadiene rubber or a hydrogenated product thereof, and a styrene-butadiene block copolymer or a hydrogenated product thereof, a styrene-isoprene block copolymer or a hydrogenated product thereof, and an acrylonitrile-butadiene rubber or a hydrogenated product thereof.

Examples of the non-diene-based polymer include, but are not limited to, olefin-based elastomers such as an ethylene-propylene rubber, an ethylene-propylene-diene rubber, an ethylene-butene-diene rubber, an ethylene-butene rubber, an ethylene-hexene rubber and an ethylene-octene rubber, a butyl rubber, a brominated butyl rubber, an acrylic rubber, a fluorine rubber, a silicone rubber, a chlorinated polyethylene rubber, an epichlorohydrin rubber, an α,β-unsaturated nitrile-acrylic acid ester-conjugated diene copolymer rubber, a urethane rubber and a polysulfide rubber.

Examples of the natural rubber include, but are not limited to, smoked sheets of RSS Nos. 3 to 5, SMR and epoxidized natural rubber.

The above-described various rubber-like polymers may be in the form of a modified rubber imparted with a functional group having polarity such as a hydroxyl group or an amino group. When the rubber composition of the present embodiment is used as a material for a tire, a butadiene rubber, an isoprene rubber, a styrene-butadiene rubber, a natural rubber and a butyl rubber are preferably used as the rubber-like polymer.

The weight average molecular weight of the rubber-like polymer is, from the viewpoint of balance between various performances of the resin composition and processing characteristics, preferably 2,000 or more and 2,000,000 or less, and more preferably 5,000 or more and 1,500,000 or less. Besides, a rubber-like polymer having a low molecular weight, namely, what is called a liquid rubber, can be used.

One of these rubber-like polymers may be singly used, or two or more of these may be used together.

In obtaining the rubber composition using the modified conjugated diene-based polymer obtained by the production method of the present embodiment as the rubber composition containing the rubber-like polymer, a content ratio (in a mass ratio) of the modified conjugated diene-based polymer described above to the rubber-like polymer is, in terms of (the modified conjugated diene-based polymer/the rubber-like polymer), preferably 10/90 or more and 100/0 or less, more preferably 20/80 or more and 90/10 or less, and further preferably 50/50 or more and 80/20 or less.

Accordingly, the rubber component contains, based on the total amount (100% by mass) of the rubber component, preferably 10% by mass or more and 100% by mass or less, more preferably 20% by mass or more and 90% by mass or less, and further preferably 50% by mass or more and 80% by mass or less of the modified conjugated diene-based polymer.

If the content ratio of (the modified conjugated diene-based polymer/the rubber-like polymer) falls in the above-described range, abrasion resistance and fracture strength when in the form of a vulcanizate tend to be excellent and the balance between a low hysteresis loss property and wet skid resistance tends to be good.

Examples of the filler contained in the rubber composition of the present embodiment include, but are not limited to, the silica-based inorganic filler as well as carbon black, a metal oxide, and a metal hydroxide. Among these, the silica-based inorganic filler is preferred.

One of these fillers may be singly used, or two or more of these may be used together.

A content of the filler in the rubber composition is 5.0 parts by mass or more and 150 parts by mass or less, preferably 20 parts by mass or more and 100 parts by mass or less, and further preferably 30 parts by mass or more and 90 parts by mass or less based on 100 parts by mass of the rubber component containing the modified conjugated diene-based polymer.

From the viewpoint of exhibiting the effect of the filler addition, the content of the filler in the rubber composition is 5.0 parts by mass or more based on 100 parts by mass of the rubber component, and from the viewpoint that the filler is sufficiently dispersed to attain practically sufficient processability and mechanical strength of the rubber composition, the content is 150 parts by mass or less based on 100 parts by mass of the rubber component.

The silica-based inorganic filler is not particularly limited, any of known fillers can be used, a solid particle containing SiO₂ or Si₃Al as a constituent unit is preferred, and a solid particle containing SiO₂ or Si₃Al as a principal component of a constituent unit is more preferred. Here, the principal component refers to a component contained in the silica-based inorganic filler in an amount of 50% by mass or more, preferably 70% by mass or more, and more preferably 80% by mass or more.

Examples of the silica-based inorganic filler include, but are not limited to, silica, clay, talc, mica, diatomite, wollastonite, montmorillonite, zeolite and inorganic fibrous substances such as glass fiber. Besides, examples include a silica-based inorganic filler having a hydrophobized surface, and a mixture of a silica-based inorganic filler and an inorganic filler excluding silica.

Among these, from the viewpoint of strength and abrasion resistance, silica and glass fiber are preferred, and silica is more preferred.

Examples of the silica include dry silica, wet silica and synthetic silicate silica. Among these silica, wet silica is preferred from the viewpoint that it is excellent in the effect of improving fracture strength and balance in wet skid resistance.

From the viewpoint of obtaining practically good abrasion resistance and fracture strength of the rubber composition, a nitrogen adsorption specific surface area, obtained by the BET adsorption method, of the silica-based inorganic filler is preferably 100 m²/g or more and 300 m²/g or less, and more preferably 170 m²/g or more and 250 m²/g or less.

Besides, a silica-based inorganic filler having a comparatively small specific surface area (for example, a specific surface area less than 200 m²/g) and a silica-based inorganic filler having a comparatively large specific surface area (for example, 200 m²/g or more) can be used in combination if necessary.

If a silica-based inorganic filler having a comparatively large specific surface area (of, for example, 200 m²/g or more) is used in particular, the rubber composition containing the modified conjugated diene-based polymer described above tends to be improved in dispersibility of silica, and be effective particularly in improvement of abrasion resistance, and be capable of well-balanced in good fracture strength and a low hysteresis loss property.

A content of the silica-based inorganic filler in the rubber composition is preferably 5.0 parts by mass or more and 150 parts by mass, more preferably 20 parts by mass or more and 100 parts by mass or less based on 100 parts by mass of the rubber component containing the modified conjugated diene-based polymer obtained by the production method of the present embodiment. From the viewpoint of exhibiting the effect of the addition of the silica-based inorganic filler, the content of the silica-based inorganic filler in the rubber composition is 5.0 parts by mass or more based on 100 parts by mass of the rubber component, and from the viewpoint that the silica-based inorganic filler is sufficiently dispersed to attain practically sufficient processability and mechanical strength of the rubber composition, the content is preferably 150 parts by mass or less based on 100 parts by mass of the rubber component.

Examples of the carbon black include, but are not limited to, carbon blacks of SRF, FEF, HAF, ISAF and SAF classes. Among these, a carbon black having a nitrogen adsorption specific surface area of 50 m²/g or more and dibutyl phthalate (DBP) oil absorption of 80 mL/100 g or less is preferred.

In the rubber composition, a content of the carbon black is preferably 0.5 parts by mass or more and 100 parts by mass or less, more preferably 3.0 parts by mass or more and 100 parts by mass or less, and further preferably 5.0 parts by mass or more and 50 parts by mass or less based on 100 parts by mass of the rubber component containing the modified conjugated diene-based polymer obtained by the production method of the present embodiment. From the viewpoint of exhibiting performances required in use as a tire or the like such as dry grip performance and conductivity, the content of the carbon black in the rubber composition is preferably 0.5 parts by mass or more based on 100 parts by mass of the rubber component, and from the viewpoint of dispersibility, the content is preferably 100 parts by mass or less based on 100 parts by mass of the rubber component.

The metal oxide refers to a solid particle containing a principal component of a constituent unit represented by chemical formula MxOy (wherein M represents a metal atom, and x and y each independently represent an integer of 1 to 6).

Examples of the metal oxide include, but are not limited to, alumina, titanium oxide, magnesium oxide and zinc oxide.

Examples of the metal hydroxide include, but are not limited to, aluminum hydroxide, magnesium hydroxide and zirconium hydroxide.

In a production method for the rubber composition of the present embodiment, a silane modifier may be contained.

The silane modifier is preferably a compound that has a function to make close the interaction between the rubber component and the inorganic filler, has a group having affinity with or a binding property to both of the rubber component, and, the silica-based inorganic filler, and contains, in one molecule, a sulfur bond portion and an alkoxysilyl group or silanol group portion. Examples of such a compound include, but are not particularly limited to, bis-[3-(triethoxysilyl)-propyl]-tetrasulfide, bis-[3-(triethoxysilyl)-propyl]-disulfide and bis-[2-(triethoxysilyl)-ethyl]-tetrasulfide.

In the rubber composition, a content of the silane modifier is preferably 0.1 parts by mass or more and 30 parts by mass or less, more preferably 0.5 parts by mass or more and 20 parts by mass or less, and further preferably 1.0 part by mass or more and 15 parts by mass or less based on 100 parts by mass of the inorganic filler. If the content of the silane modifier falls in this range, there is a tendency that the effect of the addition of the silane modifier can be more conspicuous.

The rubber composition of the present embodiment may contain a rubber softener from the viewpoint of improvement of the processability.

An amount of the rubber softener to be added is expressed, based on 100 parts by mass of the rubber component containing the modified conjugated diene-based polymer obtained by the production method of the present embodiment, as a total amount of the rubber softener precedently contained in the modified conjugated diene-based polymer or another rubber-like polymer, and the rubber softener added in obtaining the rubber composition.

As the rubber softener, a mineral oil or a liquid or low molecular weight synthetic softer is suitably used.

A mineral oil-based rubber softener, which is used for softening, expanding and improving processability of a rubber and is designated as a process oil or an extender oil, is a mixture of an aromatic ring, a naphthene ring and a paraffin chain, and one in which the number of carbon atoms of the paraffin chain is 50% or more of the number of all carbon atoms is designated as a paraffin-based softener, one in which the number of carbon atoms of the naphthene ring is 30% or more and 45% or less of the number of all carbon atoms is designated as a naphthene-based softener, and one in which the number of aromatic carbon atoms exceeds 30% of the number of all carbon atoms is designated as an aromatic-based softener.

When the modified conjugated diene-based polymer of the present embodiment is a copolymer of a conjugated diene compound and a vinyl aromatic compound, a rubber softener to be used is preferably one having an appropriate aromatic content because such a softener tends to fit with the copolymer.

In the rubber composition, the content of the rubber softener is, based on 100 parts by mass of the rubber component, preferably 0 part by mass or more and 100 parts by mass or less, more preferably 10 parts by mass or more and 90 parts by mass or less, and further preferably 30 parts by mass or more and 90 parts by mass or less. If the content of the rubber softener is 100 parts by mass or less based on 100 parts by mass of the rubber component, there is a tendency that bleeding out is suppressed and stickiness of the surface of the rubber composition is suppressed.

Examples of a method for mixing the modified conjugated diene-based polymer obtained by the production method of the present embodiment with another rubber-like polymer, a silica-based inorganic filler, carbon black or another filler, a silane modifier, and various additives such as a rubber softener include, but are not limited to, a melt-kneading method using a general mixer such as an open roll, a banbury mixer, a kneader, a single shaft screw extruder, a twin shaft screw extruder or a multi-shaft screw extruder, and a method in which the respective components are melted and mixed followed by removal of a solvent by heating.

Among these methods, the melt-kneading method using a roll, a banbury mixer, a kneader or an extruder is preferred from the viewpoint of productivity and high kneadability. Besides, either of a method in which the rubber component, another filler, a silane modifier and additives are kneaded all together or a method in which these are mixed dividedly in plural times is applicable.

The rubber composition of the present embodiment may be a vulcanized composition having been vulcanized with a vulcanizing agent. Examples of the vulcanizing agent include, but are not limited to, radical generators such as organic peroxides and azo compounds, oxime compounds, nitroso compounds, polyamine compounds, sulfur and sulfur compounds.

In the rubber composition of the present embodiment, a content of the vulcanizing agent is preferably 0.01 parts by mass or more and 20 parts by mass or less, and more preferably 0.1 parts by mass or more and 15 parts by mass or less based on 100 parts by mass of the rubber component. As a vulcanizing method, any of known methods is applicable, and a vulcanization temperature is preferably 120°C or more and 200°C or less, and more preferably 140°C or more and 180°C or less.

For the vulcanization, a vulcanization accelerator may be used if necessary. As the vulcanization accelerator, any of known materials can be used, and examples include, but are not limited to, sulphenamide-based, guanidine-based, thiuram-based, aldehyde-amine-based, aldehyde-ammonia-based, thiazole-based, thiourea-based and dithiocarbamate-based vulcanization accelerators. Besides, examples of a vulcanization aid include, but are not limited to, zinc oxide and stearic acid. A content of the vulcanization accelerator is preferably 0.01 parts by mass or more and 20 parts by mass or less, and more preferably 0.1 parts by mass or more and 15 parts by mass or less based on 100 parts by mass of the rubber component.

The rubber composition of the present embodiment may contain, as long as the object of the present embodiment is not impaired, various additives such as another softener excluding those described above, and a filler, a heat resistance stabilizer, an antistatic agent, a weathering stabilizer, an anti-ageing agent, a colorant and a lubricant.

As another softener, any of known softeners can be used.

Specific examples of another filler include, but are not particularly limited to, calcium carbonate, magnesium carbonate, aluminum sulfate and barium sulfate. As each of the heat resistance stabilizer, the antistatic agent, the weathering stabilizer, the anti-ageing agent, the colorant and the lubricant, any of known materials can be used.

### [Tire and Production Method for Tire]

A tire of the present embodiment contains the rubber composition of the present embodiment described above.

A production method for the tire of the present embodiment includes a step of obtaining a modified conjugated diene-based polymer by the production method of the present embodiment, a step of obtaining a rubber composition containing the modified conjugated diene-based polymer, and a step of molding the rubber composition.

The rubber composition containing the modified conjugated diene-based polymer obtained by the production method of the present embodiment described above is suitably used as a rubber composition for a tire.

The rubber composition for the tire is applicable to, but not limited to, various tires such as a fuel-efficient tire, an all-season tire, a high-performance tire and a studless tire; and various tire portions such as a tread, a carcass, a sidewall and a bead. In particular, since the rubber composition for the tire is excellent in abrasion resistance, fracture strength and balance between a low hysteresis loss property and wet skid resistance obtained when in the form of a vulcanizate, it is suitably used as a tread of a fuel-efficient tire or a high-performance tire.

### Examples

The present embodiment will now be described in more detail with reference to specific examples and comparative examples.

Various physical properties of the examples and comparative examples were measured by the following methods.

In the following description, a conjugated diene-based polymer coupled by using a nitrogen atom-containing modifier containing a prescribed compound is designated as a "modified conjugated diene-based polymer" or "coupled conjugated diene-based polymer".

Besides, a conjugated diene-based polymer in an unmodified state is designated as an "unmodified conjugated diene-based polymer" or a "conjugated diene-based polymer".

### (Physical Property 1) Mooney Viscosity of Polymer

An unmodified conjugated diene-based polymer or a conjugated diene-based polymer coupled by using a nitrogen atom-containing modifier (hereinafter also referred to as the "modified conjugated diene-based polymer") was used as a sample to measure a Mooney viscosity by using a Mooney viscometer (trade name "VR1132" manufactured by Ueshima Seisakusho Co., Ltd.) in accordance with ISO 289 with an L-type rotor used.

A measurement temperature was 110°C when an unmodified conjugated diene-based polymer was used as a sample, and was 100°C when a modified conjugated diene-based polymer was used as a sample.

First, a sample was preheated at the test temperature for 1 minute, the rotor was rotated at 2 rpm, and a torque was measured 4 minutes after as a Mooney viscosity (ML₍₁₊₄₎).

### (Physical Property 2) Mooney Stress Relaxation Rate

After measuring, by using a modified conjugated diene-based polymer as a sample, a Mooney viscosity by using a Mooney viscometer (trade name "VR1132" manufactured by Ueshima Seisakusho Co., Ltd.) in accordance with ISO 289 with an L-type rotor used, the rotation of the rotor was immediately stopped, and the torque in terms of the Mooney unit was recorded every 0.1 seconds from 1.6 seconds to 5 seconds after the stop. The slope of a straight line resulting from double logarithmic plotting of the torque and the time (sec) was obtained, and the absolute value was defined as a Mooney stress relaxation rate (MSR).

### (Physical Property 3) Branch Number (Bn)

A branch number (Bn) of a modified conjugated diene-based polymer was measured by a viscosity detector-equipped GPC-light scattering measurement method as follows.

A modified conjugated diene-based polymer was used as a sample, and a gel permeation chromatography (GPC) measurement apparatus (trade name "GPCmax VE-2001" manufactured by Malvern Panalytical Ltd.) including a series of three columns using a polystyrene-based gel as a filler was used. The measurement was performed by using three detectors, that is, a light scattering detector, an RI detector, and a viscosity detector (trade name "TDA305" manufactured by Malvern Panalytical Ltd.) connected in the stated order, and based on standard polystyrene, an absolute molecular weight was obtained from results obtained by using the light scattering detector and the RI detector, and an intrinsic viscosity was obtained from results obtained by using the RI detector and the viscosity detector.

A straight-chain polymer was used under assumption of having an intrinsic viscosity [η] of -3.883 M^{0.771}, and a contracting factor (g') was calculated as a ratio in the intrinsic viscosity to each molecular weight. It is noted that M herein represents the absolute molecular weight.

Thereafter, the thus obtained contracting factor (g') was used to calculate a branch number (Bn) defined as g' = 6 Bn/{(Bn+1)(Bn+2)}.

As an eluent, tetrahydrofuran (hereinafter also referred to as "THF") containing 5 mmol/L of triethylamine was used. As the columns, a series of columns of trade names "TSKgel G4000HXL", "TSKgel G5000HXL" and "TSKgel G6000HXL" manufactured by Tosoh Corporation were connected and used.

Twenty (20) mg of a sample for the measurement was dissolved in 10 mL of THF to obtain a measurement solution, and 100 µL of the measurement solution was injected into the GPC measurement apparatus for performing the measurement under conditions of an oven temperature of 40°C and a THF flow rate of 1 mL/min.

### (Physical Property 4) Molecular Weight

### <Measurement Conditions 1>

An unmodified conjugated diene-based polymer or a modified conjugated diene-based polymer used as a sample was measured for a chromatogram using a GPC measurement apparatus (trade name "HLC-8320GPC" manufactured by Tosoh Corporation) including a series of three columns using a polystyrene-based gel as a filler with an RI detector (trade name "HLC8020" manufactured by Tosoh Corporation) used, and on the basis of a calibration curve obtained using standard polystyrene, a weight average molecular weight (Mw), a number average molecular weight (Mn) and a molecular weight distribution (Mw/Mn) were obtained.

As an eluent, THF (tetrahydrofuran) containing 5 mmol/L of triethylamine was used. As the columns, trade name "TSKguardcolumn Super MP(HZ)-H" manufactured by Tosoh Corporation connected, as a guard column at a previous stage, to a series of three columns of trade name "TSKgel Super Multipore HZ-H" manufactured by Tosoh Corporation were used.

Ten (10) mg of a sample for the measurement was dissolved in 10 mL of THF to obtain a measurement solution, and 10 µL of the measurement solution was injected into the GPC measurement apparatus for performing the measurement under conditions of an oven temperature of 40°C and a THF flow rate of 0.35 mL/min.

Among various samples having been subjected to the measurement under the above-described measurement conditions 1, a sample having a molecular weight distribution (Mw/Mn) less than 1.6 was subjected again to the measurement under measurement conditions 2 described below. With respect to a sample having been subjected to the measurement under the measurement conditions 1 and found to have a molecular weight distribution of 1.6 or more, the measurement was performed under the measurement conditions 1.

### <Measurement Conditions 2>

An unmodified conjugated diene-based polymer or a modified conjugated diene-based polymer used as a sample was measured for a chromatogram using a GPC measurement apparatus including a series of three columns using a polystyrene-based gel as a filler, and on the basis of a calibration curve obtained using standard polystyrene, a weight average molecular weight (Mw), and a number average molecular weight (Mn) were obtained.

As an eluent, THF containing 5 mmol/L of triethylamine was used. As the columns, a guard column of trade name "TSKguardcolumn Super H-H" manufactured by Tosoh Corporation, and columns of trade names "TSKgel SuperH5000", "TSKgel SuperH6000", and "TSKgel SuperH7000" manufactured by Tosoh Corporation were used.

An RI detector (trade name "HLC8020" manufactured by Tosoh Corporation) was used under conditions of an oven temperature of 40°C and a THF flow rate of 0.6 mL/min. Ten (10) mg of a sample for the measurement was dissolved in 20 mL of THF to obtain a measurement solution, and 20 µL of the measurement solution was injected into the GPC measurement apparatus for performing the measurement.

With respect to a sample having been subjected to the measurement under the measurement conditions 1 and found to have a molecular weight distribution less than 1.6, the measurement was performed under the measurement conditions 2.

### (Physical Property 5) Modification Ratio

A modification ratio of a modified conjugated diene-based polymer was measured by column adsorption GPC as follows.

A modified conjugated diene-based polymer was used as a sample, and the measurement was performed by applying a characteristic that a modified basic polymer component adsorbs onto a GPC column using a silica-based gel as a filler.

A modification ratio was obtained by measuring an amount of adsorption onto a silica-based column based on a difference between a chromatogram measured by using a polystyrene-based column and a chromatogram measured by using a silica-based column obtained from a sample solution containing a sample and low molecular weight internal standard polystyrene.

Specifically, the measurement was performed as described below.

A sample found to have a molecular weight distribution of 1.6 or more by the measurement under the measurement conditions 1 of (Physical Property 4) was measured under the following measurement conditions 3. A sample found to have a molecular weight distribution less than 1.6 by the measurement under the measurement conditions 1 of (Physical Property 4) was measured under the following measurement conditions 4.

### <Preparation of Sample Solution>

Ten (10) mg of a sample and 5 mg of standard polystyrene were dissolved in 20 mL of THF to obtain a sample solution.

### <Measurement Conditions 3>

GPC measurement conditions using polystyrene-based column:
An apparatus of trade name "HLC-8320GPC" manufactured by Tosoh Corporation was used, THF containing 5 mmol/L of triethylamine was used as an eluent, and 10 µL of the sample solution was injected into the apparatus to obtain a chromatogram using an RI detector under conditions of a column oven temperature of 40°C and a THF flow rate of 0.35 mL/min.

As the columns, a series of three columns of trade name "TSKgel Super Multipore HZ-H" and a guard column of trade name "TSKguardcolumn SuperMP(HZ)-H" manufactured by Tosoh Corporation connected at a previous stage were used.

### <Measurement Conditions 4>

GPC measurement conditions using polystyrene-based column:
THF containing 5 mmol/L of triethylamine was used as an eluent, and 20 µL of the sample solution was injected into the apparatus to perform the measurement.

As the columns, a guard column of trade name "TSKguardcolumn Super H-H" manufactured by Tosoh Corporation and columns of trade names "TSKgel Super H5000", "TSKgel Super H6000", and "TSKgel Super H7000" manufactured by Tosoh Corporation were used. A chromatogram was obtained by performing the measurement by using an RI detector (HLC8020, manufactured by Tosoh Corporation) under conditions of a column oven temperature of 40°C and a THF flow rate of 0.6 mL/min.

GPC measurement conditions using silica-based column:
An apparatus of trade name "HLC-8320GPC" manufactured by Tosoh Corporation was used, THF was used as an eluent, and 50 µL of the sample solution was injected into the apparatus to obtain a chromatogram by using an RI detector under conditions of a column oven temperature of 40°C and a THF flow rate of 0.5 mL/min. A series of columns of trade names "Zorbax PSM-1000S", "PSM-300S" and "PSM-60S", and a guard column of trade name "DIOL 4.6 x 12.5 mm 5 micron" connected at a previous stage were used.

### <Calculation method for modification ratio>

Assuming that the whole peak area of the chromatogram obtained by using the polystyrene-based column was 100, that a peak area of the sample was P1, that a peak area of standard polystyrene was P2, that the whole peak area of the chromatogram obtained by using the silica-based column was 100, that a peak area of the sample was P3, and that a peak area of standard polystyrene was P4, a modification ratio (%) was obtained in accordance with the following expression: Modification ratio (%) = [1 - (P2 x P3) / (P1 x P4)] x 100 wherein P1 + P2 = P3 + P4 = 100.

### (Physical Property 6) Amount of Bound Styrene

One hundred (100) mg of a modified conjugated diene-based polymer not containing a rubber softener used as a sample was dissolved in chloroform to be diluted to 100 mL, and the resultant was used as a measurement sample.

Based on the amount of absorption of a phenyl group of styrene at a UV absorption wavelength (about 254 nm), the amount of bound styrene (% by mass) based on 100% by mass of the sample of the modified conjugated diene-based polymer was measured (measurement apparatus: spectrophotometer "UV-2450" manufactured by Shimadzu Corporation).

### (Physical Property 7) Microstructure of Butadiene Portion (Amount of 1,2-Vinyl Bond)

Fifty (50) mg of a modified conjugated diene-based polymer not containing a rubber softener used as a sample was dissolved in 10 mL of carbon disulfide, and the resultant was used as a measurement sample.

A solution cell was used to measure an infrared spectrum in a range of 600 to 1000 cm⁻¹, and in accordance with a calculation formula of the Hampton method (R. R. Hampton, Analytical Chemistry 21, 923 (1949)) based on absorbance at a prescribed wavelength, a microstructure of a butadiene portion, namely, an amount of 1,2-vinyl bond (mol%), was obtained (measurement apparatus: Fourier transform infrared spectrophotometer "FT-IR230" manufactured by JASCO Corporation).

### (Physical Property 8) Molecular Weight (Absolute Molecular Weight Mw-i) obtained by GPC-light Scattering Measurement

A modified conjugated diene-based polymer was used as a sample, and a GPC-light scattering measurement apparatus including a series of three columns using a polystyrene-based gel as a filler was used to measure a chromatogram for obtaining a weight average molecular weight (Mw-i) (also designated as an "absolute molecular weight") based on the viscosity of a solution and a light scattering method.

As an eluent, a mixed solution of tetrahydrofuran and triethylamine (THF in TEA: prepared by mixing 5 mL of triethylamine in 1 L of tetrahydrofuran) was used.

As the columns, a series of a guard column of trade name "TSKguardcolumn HHR-H" manufactured by Tosoh Corporation, and columns of trade names "TSKgel G6000HHR", "TSKgel G5000HHR", and "TSKgel G4000HHR" were connected and used.

A GPC-light scattering measurement apparatus (trade name "Viscotek TDAmax" manufactured by Malvern Panalytical Ltd.) was used under conditions of an oven temperature of 40°C and a THF flow rate of 1.0 mL/min.

Ten (10) mg of a sample for measurement was dissolved in 20 mL of THF to obtain a measurement solution, and 200 µL of the measurement solution was injected into the GPC measurement apparatus for the measurement.

### (Evaluation 9) Change with Time (Increase in Mooney Viscosity after 1 Month)

A modified conjugated diene-based polymer was stored at normal temperature under normal pressure for 1 month, and the Mooney viscosity after the storage was measured to calculate a difference from the Mooney viscosity measured immediately after the polymerization.

In the table, the difference is shown as "δML Mooney Viscosity".

A smaller value indicates smaller change with time and better quality stability.

### [Modified Conjugated Diene-based Polymer]

### (Example 1) Modified Conjugated Diene-based Polymer (Sample 1)

Two tank pressure vessels, each of which is a stirrer-equipped tank reactor having an internal volume of 10 L and a ratio (L/D) of internal height (L) and diameter (D) of 4.0, having an inlet at a bottom and an outlet at a top, and equipped with a stirrer and a temperature controlling jacket, were connected to each other as polymerization reactors.

1,3-Butadiene, from which a water content had been precedently removed, styrene and n-hexane were mixed under conditions of 18.6 g/min, 10.0 g/min and 175.2 g/min, respectively. In a static mixer provided in the middle of a pipe for supplying the thus obtained mixed solution to the inlet of the reactor, n-butyllithium to be used for residual impurity inactivation was added and mixed in an amount of 0.103 mmol/min, and the resultant was continuously supplied to the bottom of the reactor. Besides, 2,2-bis(2-oxolanyl)propane used as a polar material and n-butyllithium used as a polymerization initiator were supplied, at rates of respectively 0.081 mmol/min and 0.143 mmol/min, to the bottom of the first reactor in which materials were vigorously mixed by the stirrer, and the internal temperature of the reactor was kept at 67°C.

The thus obtained polymer solution was continuously taken out from the top of the first reactor to be continuously supplied to the bottom of the second reactor for continuing the reaction at 70°C, and the resultant was further supplied to a static mixer from the top of the second reactor. When the polymerization was sufficiently stabilized, while copolymerizing 1,3-butadiene and styrene, trimethoxy(4-vinylphenyl)silane (shown as "BS-1" in the table) used as a branching agent was added at a rate of 0.0190 mmol/min from the bottom of the second reactor to perform a polymerization reaction and a branching reaction for obtaining a conjugated diene-based polymer having a main chain branch structure.

When the polymerization reaction and the branching reaction were stabilized, a small amount of a conjugated diene-based polymer solution prior to addition of a modifier was taken out, an antioxidant (BHT) was added thereto in an amount of 0.2 g per 100 g of the polymer, then the solvent was removed, and a Mooney viscosity at 110°C and various molecular weights were measured. The physical properties are shown in Table 1.

Next, to the polymer solution flowing out of the outlet of the reactor, a compound M-1 (a compound represented as (M-1) described above in <Compound [M] used in Modifying Step>; shown as "M-1" in the table) was continuously added as a modifier at a rate of 0.0360 mmol/min, and the resultant was mixed by using a static mixer to perform a coupling reaction. Here, a time until the addition of the modifier to the polymer solution flowing out of the outlet of the reactor was 4.8 min, the temperature was 68°C, and a difference between the temperature in the polymerizing step and the temperature until the addition of the modifier was 2°C.

After the coupling reaction, a small amount of a conjugated diene-based polymer solution was taken out, an antioxidant (BHT) was added thereto in an amount of 0.2 g per 100 g of the polymer, then the solvent was removed, and the amount of bound styrene (Physical Property 6) and the microstructure of a butadiene portion (the amount of 1,2-vinyl bond; Physical Property 7) were measured. Measurement results are shown in Table 1.

Next, to the polymer solution resulting from the coupling reaction, the antioxidant (BHT) was continuously added in an amount of 0.2 g per 100 g of the polymer at 0.055 g/min (n-hexane solution) to complete the coupling reaction. Simultaneously with the antioxidant, SRAE oil (JOMO Process NC 140, manufactured by JX Nippon Oil & Energy Corporation) was continuously added as a rubber softener in an amount of 25.0 g per 100 g of the polymer, and the resultant was mixed by using a static mixer. The solvent was removed by steam stripping, and thus, a modified conjugated diene-based polymer (sample 1) was obtained.

Physical properties of the sample 1 are shown in Table 1.

In each of the polymer obtained prior to the addition of the branching agent, the polymer obtained after the addition of the branching agent, and the polymers obtained in the respective steps after the addition of the modifier, the structure of the modified conjugated diene-based polymer was identified based on comparison between a molecular weight measured by GPC and a branch number measured by viscosity detector-equipped GPC. Hereinafter, the structure of each sample was similarly identified.

### (Example 2) Modified Conjugated Diene-based Polymer (Sample 2)

A modified conjugated diene-based polymer (sample 2) was obtained in the same manner as in Example 1 except that the modifier was changed from the compound M-1 to a compound M-2 (a compound represented as (M-2) described above in <Compound [M] used in Modifying Step>; shown as "M-2" in the table), and that the amount thereof to be added was changed to 0.0720 mmol/min. Physical properties of the sample 2 are shown in Table 1.

### (Example 3) Modified Conjugated Diene-based Polymer (Sample 3)

A modified conjugated diene-based polymer (sample 3) was obtained in the same manner as in Example 1 except that the modifier was changed from the compound M-1 to a compound M-3 (a compound represented as (M-3) described above in <Compound [M] used in Modifying Step>; shown as "M-3" in the table), and that the amount thereof to be added was changed to 0.0360 mmol/min. Physical properties of the sample 3 are shown in Table 1.

### (Example 4) Modified Conjugated Diene-based Polymer (Sample 4)

A modified conjugated diene-based polymer (sample 4) was obtained in the same manner as in Example 1 except that the modifier was changed from the compound M-1 to a compound M-4 (a compound represented as (M-4) described above in <Compound [M] used in Modifying Step>; shown as "M-4" in the table), and that the amount thereof to be added was changed to 0.0720 mmol/min. Physical properties of the sample 4 are shown in Table 1.

### (Example 5) Modified Conjugated Diene-based Polymer (Sample 5)

A modified conjugated diene-based polymer (sample 5) was obtained in the same manner as in Example 1 except that the modifier was changed from the compound M-1 to a compound M-5 (a compound represented as (M-5) described above in <Compound [M] used in Modifying Step>; shown as "M-5" in the table), and that the amount thereof to be added was changed to 0.0360 mmol/min. Physical properties of the sample 5 are shown in Table 1.

### (Example 6) Modified Conjugated Diene-based Polymer (Sample 6)

A modified conjugated diene-based polymer (sample 6) was obtained in the same manner as in Example 1 except that the modifier was changed from the compound M-1 to a compound M-13 (a compound represented as (M-13) described above in <Compound [M] used in Modifying Step>; shown as "M-13" in the table), and that the amount thereof to be added was changed to 0.0250 mmol/min. Physical properties of the sample 6 are shown in Table 1.

### (Example 7) Modified Conjugated Diene-based Polymer (Sample 7)

A modified conjugated diene-based polymer (sample 7) was obtained in the same manner as in Example 1 except that the amount of the compound M-1 (shown as "M-1" in the table) to be added as the modifier was changed to 0.0420 mmol/min. Physical properties of the sample 7 are shown in Table 1.

### (Example 8) Modified Conjugated Diene-based Polymer (Sample 8)

A modified conjugated diene-based polymer (sample 8) was obtained in the same manner as in Example 1 except that the rate of adding 1,3-butadiene was changed from 18.6 g/min to 24.3 g/min, that the rate of adding styrene was changed from 10.0 g/min to 4.3 g/min, and that the rate of adding 2,2-bis(2-oxolanyl)propane used as a polar material was changed from 0.081 mmol/min to 0.044 mmol/min. Physical properties of the sample 8 are shown in Table 1.

### (Example 9) Modified Conjugated Diene-based Polymer (Sample 9)

A modified conjugated diene-based polymer (sample 9) was obtained in the same manner as in Example 1 except that the rate of adding 1,3-butadiene was changed from 18.6 g/min to 17.1 g/min, that the rate of adding styrene was changed from 10.0 g/min to 11.5 g/min, and that the rate of adding 2,2-bis(2-oxolanyl)propane used as a polar material was changed from 0.081 mmol/min to 0.089 mmol/min. Physical properties of the sample 9 are shown in Table 2.

### (Example 10) Modified Conjugated Diene-based Polymer (Sample 10)

A modified conjugated diene-based polymer (sample 10) was obtained in the same manner as in Example 1 except that the rate of adding 2,2-bis(2-oxolanyl)propane used as the polar material was changed from 0.081 mmol/min to 0.200 mmol/min. Physical properties of the sample 10 are shown in Table 2.

### (Example 11) Modified Conjugated Diene-based Polymer (Sample 11)

A modified conjugated diene-based polymer (sample 11) was obtained in the same manner as in Example 1 except that the branching agent was changed from trimethoxy(4-vinylphenyl)silane to dimethylmethoxy(4-vinylphenyl)silane (shown as "BS-2" in the table), and that the amount thereof to be added was changed to 0.0350 mmol/min. Physical properties of the sample 11 are shown in Table 2.

### (Example 12) Modified Conjugated Diene-based Polymer (Sample 12)

A modified conjugated diene-based polymer (sample 12) was obtained in the same manner as in Example 1 except that the branching agent was changed from trimethoxy(4-vinylphenyl)silane to dimethylmethoxy(4-vinylphenyl)silane (shown as "BS-2" in the table), that the amount thereof to be added was changed to 0.0350 mmol/min, and that the modifier was changed from the compound M-1 to a compound M-3 (a compound represented as (M-3) described above in <Compound [M] used in Modifying Step>; shown as "M-3" in the table). Physical properties of the sample 12 are shown in Table 2.

### (Example 13) Modified Conjugated Diene-based Polymer (Sample 13)

A modified conjugated diene-based polymer (sample 13) was obtained in the same manner as in Example 1 except that the branching agent was changed from trimethoxy(4-vinylphenyl)silane to dimethylmethoxy(4-vinylphenyl)silane (shown as "BS-2" in the table), that the amount thereof to be added was changed to 0.0350 mmol/min, that the modifier was changed from the compound M-1 to a compound M-13 (a compound represented as (M-13) described above in <Compound [M] used in Modifying Step>; shown as "M-13" in the table), and that the amount thereof to be added was changed to 0.0160 mmol/min. Physical properties of the sample 13 are shown in Table 2.

### (Example 14) Modified Conjugated Diene-based Polymer (Sample 14)

A modified conjugated diene-based polymer (sample 14) was obtained in the same manner as in Example 1 except that the branching agent was changed from trimethoxy(4-vinylphenyl)silane to 1,1-bis(4-(dimethylmethoxysilyl)phenyl)ethylene (shown as "BS-3" in the table), and that the amount thereof to be added was changed to 0.0120 mmol/min. Physical properties of the sample 14 are shown in Table 2.

### (Example 15) Modified Conjugated Diene-based Polymer (Sample 15)

A modified conjugated diene-based polymer (sample 15) was obtained in the same manner as in Example 1 except that the branching agent was changed from trimethoxy(4-vinylphenyl)silane to 1,1-bis(4-(dimethylmethoxysilyl)phenyl)ethylene (shown as "BS-3" in the table), that the amount thereof to be added was changed to 0.0120 mmol/min, that the modifier was changed from the compound M-1 (shown as "M-1" in the table) to the compound M-3 (the compound represented as (M-3) described above in <Compound [M] used in Modifying Step>; shown as "M-3" in the table), and that the amount thereof to be added was changed to 0.360 mmol/min. Physical properties of the sample 15 are shown in Table 2.

### (Example 16) Modified Conjugated Diene-based Polymer (Sample 16)

A modified conjugated diene-based polymer (sample 16) was obtained in the same manner as in Example 1 except that the branching agent was changed from trimethoxy(4-vinylphenyl)silane to 1,1-bis(4-(dimethylmethoxysilyl)phenyl)ethylene (shown as "BS-3" in the table), that the amount thereof to be added was changed to 0.0120 mmol/min, that the modifier was changed from the compound M-1 (shown as "M-1" in the table) to the compound M-13 (the compound represented as (M-13) described above in <Compound [M] used in Modifying Step>; shown as "M-13" in the table), and that the amount thereof to be added was changed to 0.0160 mmol/min. Physical properties of the sample 16 are shown in Table 2.

### (Example 17) Modified Conjugated Diene-based Polymer (Sample 17)

A modified conjugated diene-based polymer (sample 17) was obtained in the same manner as in Example 1 except that the branching agent was changed from trimethoxy(4-vinylphenyl)silane to 1,1-bis(4-trimethoxysilylphenyl)ethylene (shown as "BS-4" in the table), and that the amount thereof to be added was changed to 0.0210 mmol/min. Physical properties of the sample 17 are shown in Table 3.

### (Example 18) Modified Conjugated Diene-based Polymer (Sample 18)

A modified conjugated diene-based polymer (sample 18) was obtained in the same manner as in Example 1 except that the branching agent was changed from trimethoxy(4-vinylphenyl)silane to 1,1-bis(4-trimethoxysilylphenyl)ethylene (shown as "BS-4" in the table), that the amount thereof to be added was changed to 0.0210 mmol/min, that the modifier was changed from the compound M-1 (shown as "M-1" in the table) to the compound M-3 (the compound represented as (M-3) described above in <Compound [M] used in Modifying Step>; shown as "M-3" in the table), and that the amount thereof to be added was changed to 0.0360 mmol/min. Physical properties of the sample 18 are shown in Table 3.

### (Example 19) Modified Conjugated Diene-based Polymer (Sample 19)

A modified conjugated diene-based polymer (sample 19) was obtained in the same manner as in Example 1 except that the branching agent was changed from trimethoxy(4-vinylphenyl)silane to 1,1-bis(4-trimethoxysilylphenyl)ethylene (shown as "BS-4" in the table), that the modifier was changed from the compound M-1 (shown as "M-1" in the table) to the compound M-13 (the compound represented as (M-13) described above in <Compound [M] used in Modifying Step>; shown as "M-13" in the table), and that the amount thereof to be added was changed to 0.0160 mmol/min. Physical properties of the sample 19 are shown in Table 3.

### (Example 20) Modified Conjugated Diene-based Polymer (Sample 20)

A modified conjugated diene-based polymer (sample 20) was obtained in the same manner as in Example 1 except that the branching agent was changed from trimethoxy(4-vinylphenyl)silane to trichloro(4-vinylphenyl)silane (shown as "BS-5" in the table), and that the amount thereof to be added was changed to 0.0190 mmol/min. Physical properties of the sample 20 are shown in Table 3.

### (Example 21) Modified Conjugated Diene-based Polymer (Sample 21)

A modified conjugated diene-based polymer (sample 21) was obtained in the same manner as in Example 1 except that the branching agent was changed from trimethoxy(4-vinylphenyl)silane to trichloro(4-vinylphenyl)silane (shown as "BS-5" in the table), that the amount thereof to be added was changed to 0.0190 mmol/min, that the modifier was changed from the compound M-1(shown as "M-1" in the table) to the compound M-3 (the compound represented as (M-3) described above in <Compound [M] used in Modifying Step>; shown as "M-3" in the table), and that the amount thereof to be added was changed to 0.0360 mmol/min. Physical properties of the sample 21 are shown in Table 3.

### (Example 22) Modified Conjugated Diene-based Polymer (Sample 22)

A modified conjugated diene-based polymer (sample 22) was obtained in the same manner as in Example 1 except that the branching agent was changed from trimethoxy(4-vinylphenyl)silane to trichloro(4-vinylphenyl)silane (shown as "BS-5" in the table), that the amount thereof to be added was changed to 0.0190 mmol/min, that the modifier was changed from the compound M-1 (shown as "M-1" in the table) to the compound M-13 (the compound represented as (M-13) described above in <Compound [M] used in Modifying Step>; shown as "M-13" in the table), and that the amount thereof to be added was changed to 0.0160 mmol/min. Physical properties of the sample 22 are shown in Table 3.

### (Example A-1) Coupled Conjugated Diene-based Polymer (Sample A-1)

Two tank pressure vessels, each of which is a stirrer-equipped tank reactor having an internal volume of 10 L and a ratio (L/D) of internal height (L) and diameter (D) of 4.0, having an inlet at a bottom and an outlet at a top, and equipped with a stirrer and a temperature controlling jacket, were connected to each other as polymerization reactors.

1,3-Butadiene, from which a water content had been precedently removed, styrene and n-hexane were mixed under conditions of 14.0 g/min, 10.0 g/min and 175.2 g/min, respectively. In a static mixer provided in the middle of a pipe for supplying the thus obtained mixed solution to the inlet of the reactor, n-butyllithium to be used for residual impurity inactivation was added and mixed in an amount of 0.103 mmol/min, and the resultant was continuously supplied to the bottom of the reactor. Besides, 2,2-bis(2-oxolanyl)propane used as a polar material and n-butyllithium used as a polymerization initiator were supplied, at rates of respectively 0.081 mmol/min and 0.143 mmol/min, to the bottom of the first reactor in which materials were vigorously mixed by the stirrer, and the internal temperature of the reactor was kept at 67°C.

The thus obtained polymer solution was continuously taken out from the top of the first reactor to be continuously supplied to the bottom of the second reactor for continuing the reaction at 70°C, and the resultant was further supplied to a static mixer from the top of the second reactor. When the polymerization was sufficiently stabilized, while copolymerizing 1,3-butadiene and styrene, trimethoxy(4-vinylphenyl)silane (shown as "BS-1" in the table) used as a branching agent was added at a rate of 0.0190 mmol/min from the bottom of the second reactor, and 1,3-butadiene was added in parallel at 4.6 g/min, so as to perform a polymerization reaction and a branching reaction for obtaining a conjugated diene-based polymer having a main chain branch structure.

When the polymerization reaction and the branching reaction were stabilized, a small amount of a conjugated diene-based polymer solution prior to addition of a coupling agent was taken out, an antioxidant (BHT) was added thereto in an amount of 0.2 g per 100 g of the polymer, then the solvent was removed, and a Mooney viscosity at 110°C and various molecular weights were measured. The physical properties are shown in Table 4.

Next, to the polymer solution flowing out of the outlet of the reactor, the compound M-1 (the compound represented as (M-1) described above in <Compound [M] used in Modifying Step>; shown as "M-1" in the table) used as a coupling agent was continuously added in an amount of 0.0360 mmol/min, and the resultant was mixed by using a static mixer to perform a coupling reaction.

Here, a time until the addition of the coupling agent to the polymer solution flowing out of the outlet of the reactor was 4.8 min, the temperature was 68°C, and a difference between the temperature in the polymerizing step and the temperature until the addition of the coupling agent was 2°C.

A small amount of a conjugated diene-based polymer solution after the coupling reaction was taken out, an antioxidant (BHT) was added thereto in an amount of 0.2 g per 100 g of the polymer, then the solvent was removed, and the amount of bound styrene (Physical Property 6) and the microstructure of a butadiene portion (the amount of 1,2-vinyl bond; Physical Property 7) were measured. Measurement results are shown in Table 4.

Next, to the polymer solution resulting from the coupling reaction, an antioxidant (BHT) was continuously added in an amount of 0.2 g per 100 g of the polymer at 0.055 g/min (n-hexane solution) to complete the coupling reaction.

Simultaneously with the antioxidant, SRAE oil (JOMO Process NC 140, manufactured by JX Nippon Oil & Energy Corporation) was continuously added as a rubber softener in an amount of 25.0 g per 100 g of the polymer, and the resultant was mixed by using a static mixer.

The solvent was removed by steam stripping, and thus, a coupled conjugated diene-based polymer (modified conjugated diene-based polymer) (sample A-1) having, in a part of a main chain, four-branched structure derived from the branching agent corresponding to the compound represented by the formula (1) (hereinafter also referred to as the "branching agent structure (1)") and having a four-branched star polymer structure derived from the coupling agent was obtained.

Physical properties of the sample A-1 are shown in Table 4.

In each of the polymer obtained prior to the addition of the branching agent, the polymer obtained after the addition of the branching agent, and the polymers obtained in the respective steps after the addition of the coupling agent, the structure of the coupled conjugated diene-based polymer was identified based on comparison between a molecular weight measured by GPC and a branch number measured by viscosity detector-equipped GPC. Hereinafter, the structure of each sample was similarly identified.

### (Example A-2) Coupled Conjugated Diene-based Polymer (Sample A-2)

Two tank pressure vessels, each of which was a stirrer-equipped tank reactor having an internal volume of 10 L and a ratio (L/D) of an internal height (L) and a diameter (D) of 4.0, having an inlet at a bottom and an outlet at a top, and equipped with a stirrer and a temperature controlling jacket, were connected to each other as polymerization reactors.

1,3-Butadiene, from which a water content had been precedently removed, styrene and n-hexane were mixed under conditions of 14.0 g/min, 8.0 g/min and 175.2 g/min, respectively. In a static mixer provided in the middle of a pipe for supplying the thus obtained mixed solution to the inlet of the reactor, n-butyllithium to be used for residual impurity inactivation was added and mixed in an amount of 0.103 mmol/min, and the resultant was continuously supplied to the bottom of the reactor. Besides, 2,2-bis(2-oxolanyl)propane used as a polar material and n-butyllithium used as a polymerization initiator were supplied, at rates of respectively 0.081 mmol/min and 0.143 mmol/min, to the bottom of the first reactor in which materials were vigorously mixed by the stirrer, and the internal temperature of the reactor was kept at 67°C.

The thus obtained polymer solution was continuously taken out from the top of the first reactor to be continuously supplied to the bottom of the second reactor for continuing the reaction at 70°C, and the resultant was further supplied to a static mixer from the top of the second reactor. When the polymerization was sufficiently stabilized, while copolymerizing 1,3-butadiene and styrene, trimethoxy(4-vinylphenyl)silane (shown as "BS-1" in the table) used as a branching agent was added at a rate of 0.0190 mmol/min from the bottom of the second reactor, and 1,3-butadiene and styrene were added in parallel at 4.6 g/min and 2.0 g/min, so as to perform a polymerization reaction and a branching reaction for obtaining a conjugated diene-based polymer having a main chain branch structure.

When the polymerization reaction and the branching reaction were stabilized, a small amount of a conjugated diene-based polymer solution prior to addition of a coupling agent was taken out, an antioxidant (BHT) was added thereto in an amount of 0.2 g per 100 g of the polymer, then the solvent was removed, and a Mooney viscosity at 110°C and various molecular weights were measured. The physical properties are shown in Table 4.

Next, to the polymer solution flowing out of the outlet of the reactor, the compound M-1 (the compound represented as (M-1) described above in <Compound [M] used in Modifying Step>; shown as "M-1" in the table) used as a coupling agent was continuously added in an amount of 0.0360 mmol/min, and the resultant was mixed by using a static mixer to perform a coupling reaction.

Here, a time until the addition of the coupling agent to the polymer solution flowing out of the outlet of the reactor was 4.8 min, the temperature was 68°C, and a difference between the temperature in the polymerizing step and the temperature until the addition of the coupling agent was 2°C. A small amount of a conjugated diene-based polymer solution after the coupling reaction was taken out, an antioxidant (BHT) was added thereto in an amount of 0.2 g per 100 g of the polymer, then the solvent was removed, and the amount of bound styrene (Physical Property 6) and the microstructure of a butadiene portion (the amount of 1,2-vinyl bond; Physical Property 7) were measured. Measurement results are shown in Table 4.

Next, to the polymer solution resulting from the coupling reaction, an antioxidant (BHT) was continuously added in an amount of 0.2 g per 100 g of the polymer at 0.055 g/min (n-hexane solution) to complete the coupling reaction.

Simultaneously with the antioxidant, SRAE oil (JOMO Process NC 140, manufactured by JX Nippon Oil & Energy Corporation) was continuously added as a rubber softener in an amount of 25.0 g per 100 g of the polymer, and the resultant was mixed by using a static mixer.

The solvent was removed by steam stripping, and thus, a coupled conjugated diene-based polymer (modified conjugated diene-based polymer) (sample A-2) having, in a part of a main chain, four-branched structure derived from the branching agent corresponding to the compound represented by the formula (1) (hereinafter also referred to as the "branching agent structure (1)") and having a four-branched star polymer structure derived from the coupling agent was obtained.

Physical properties of the sample A-2 are shown in Table 4.

In each of the polymer obtained prior to the addition of the branching agent, the polymer obtained after the addition of the branching agent, and the polymers obtained in the respective steps after the addition of the coupling agent, the structure of the coupled conjugated diene-based polymer was identified based on comparison between a molecular weight measured by GPC and a branch number measured by viscosity detector-equipped GPC. Hereinafter, the structure of each sample was similarly identified.

### (Comparative Example 1) Modified Conjugated Diene-based Polymer (Sample 23)

Two tank pressure vessels, each of which was a stirrer-equipped tank reactor having an internal volume of 10 L and a ratio (L/D) of an internal height (L) and a diameter (D) of 4.0, having an inlet at a bottom and an outlet at a top, and equipped with a stirrer and a temperature controlling jacket, were connected to each other as polymerization reactors.

1,3-Butadiene, from which a water content had been precedently removed, styrene and n-hexane were mixed under conditions of 18.6 g/min, 10.0 g/min and 175.2 g/min, respectively. In a static mixer provided in the middle of a pipe for supplying the thus obtained mixed solution to the inlet of the reactor, n-butyllithium to be used for residual impurity inactivation was added and mixed in an amount of 0.103 mmol/min, and the resultant was continuously supplied to the bottom of the reactor. Besides, 2,2-bis(2-oxolanyl)propane used as a polar material and n-butyllithium used as a polymerization initiator were supplied, at rates of respectively 0.081 mmol/min and 0.143 mmol/min, to the bottom of the first reactor in which materials were vigorously mixed by the stirrer, and the internal temperature of the reactor was kept at 67°C.

The thus obtained polymer solution was continuously taken out from the top of the first reactor to be continuously supplied to the bottom of the second reactor for continuing the reaction at 70°C, and the resultant was further supplied to a static mixer from the top of the second reactor. When the polymerization was sufficiently stabilized, a small amount of a polymer solution prior to addition of a modifier was taken out, an antioxidant (BHT) was added thereto in an amount of 0.2 g per 100 g of the polymer, then the solvent was removed, and a Mooney viscosity at 110°C and various molecular weights were measured. Physical Properties are shown in Table 5.

Next, to the polymer solution flowing out of the outlet of the reactor, the compound M-1 (the compound represented as (M-1) described above in <Compound [M] used in Modifying Step>; shown as "M-1" in the table) used as a modifier was continuously added at a rate of 0.0360 mmol/min, and the resultant was mixed by using a static mixer to perform a coupling reaction. Here, a time until the addition of the modifier to the polymer solution flowing out of the outlet of the reactor was 4.8 min, the temperature was 68°C, and a difference between the temperature in the polymerizing step and the temperature until the addition of the modifier was 2°C. A small amount of a conjugated diene-based polymer solution after the coupling reaction was taken out, an antioxidant (BHT) was added thereto in an amount of 0.2 g per 100 g of the polymer, then the solvent was removed, and the amount of bound styrene (Physical Property 6) and the microstructure of a butadiene portion (the amount of 1,2-vinyl bond; Physical Property 7) were measured. Measurement results are shown in Table 5.

Next, to the polymer solution resulting from the coupling reaction, an antioxidant (BHT) was continuously added in an amount of 0.2 g per 100 g of the polymer at 0.055 g/min (n-hexane solution) to complete the coupling reaction. Simultaneously with the antioxidant, SRAE oil (JOMO Process NC 140, manufactured by JX Nippon Oil & Energy Corporation) was continuously added as a rubber softener in an amount of 25.0 g per 100 g of the polymer, and the resultant was mixed by using a static mixer. The solvent was removed by steam stripping, and thus, a modified conjugated diene-based polymer (sample 23) was obtained. Physical properties of the sample 23 are shown in Table 5.

### (Comparative Example 2) Modified Conjugated Diene-based Polymer (Sample 24)

A modified conjugated diene-based polymer (sample 24) was obtained in the same manner as in Comparative Example 1 except that the modifier was changed from the compound M-1 (shown as "M-1" in the table) to the compound M-2 (the compound represented as (M-2) described above in <Compound [M] used in Modifying Step>; shown as "M-2" in the table), and that the amount thereof to be added was changed to 0.0720 mmol/min. Physical properties of the sample 24 are shown in Table 5.

### (Comparative Example 3) Modified Conjugated Diene-based Polymer (Sample 25)

A modified conjugated diene-based polymer (sample 25) was obtained in the same manner as in Comparative Example 1 except that the modifier was changed from the compound M-1 (shown as "M-1" in the table) to the compound M-3 (the compound represented as (M-3) described above in <Compound [M] used in Modifying Step>; shown as "M-3" in the table), and that the amount thereof to be added was changed to 0.0360 mmol/min. Physical properties of the sample 25 are shown in Table 5.

### (Comparative Example 4) Modified Conjugated Diene-based Polymer (Sample 26)

A modified conjugated diene-based polymer (sample 26) was obtained in the same manner as in Comparative Example 1 except that the modifier was changed from the compound M-1 (shown as "M-1" in the table) to the compound M-4 (the compound represented as (M-4) described above in <Compound [M] used in Modifying Step>; shown as "M-4" in the table), and that the amount thereof to be added was changed to 0.0720 mmol/min. Physical properties of the sample 26 are shown in Table 5.

### (Comparative Example 5) Modified Conjugated Diene-based Polymer (Sample 27)

A modified conjugated diene-based polymer (sample 27) was obtained in the same manner as in Comparative Example 1 except that the modifier was changed from the compound M-1 (shown as "M-1" in the table) to the compound M-5 (the compound represented as (M-5) described above in <Compound [M] used in Modifying Step>; shown as "M-5" in the table), and that the amount thereof to be added was changed to 0.0360 mmol/min. Physical properties of the sample 27 are shown in Table 5.

### (Comparative Example 6) Modified Conjugated Diene-based Polymer (Sample 28)

A modified conjugated diene-based polymer (sample 28) was obtained in the same manner as in Comparative Example 1 except that the modifier was changed from the compound M-1 (shown as "M-1" in the table) to the compound M-13 (the compound represented as (M-13) described above in <Compound [M] used in Modifying Step>; shown as "M-13" in the table), and that the amount thereof to be added was changed to 0.0250 mmol/min. Physical properties of the sample 28 are shown in Table 5.

### (Example 23) Modified Conjugated Diene-based Polymer (Sample 29)

A temperature-controllable autoclave having an internal volume of 5 L (L/D: 3.4) and equipped with a stirrer and a jacket was used as a reactor, and the reactor was charged with 1995 g of normal hexane and n-butyllithium for neutralizing an impurity that was present in the reactor and could inhibit a polymerization reaction. The resultant was stirred at 70°C for 5 minutes, and cooled to room temperature, and then the resultant solution was taken out to evacuate the reactor.

Next, the reactor was charged with 1670 g of normal hexane, 83 g of styrene, 236 g of 1,3-butadiene, and 2.73 mmol of 2,2-bis(2-oxolanyl)propane used as a polar material, from which impurities had been precedently removed, and polymerization was started by adding 2.92 mmol of n-butyllithium (shown as "NBL" in the table) as a polymerization initiator thereto when the temperature within the reactor was 56°C.

Immediately after starting the polymerization, the temperature within the reactor increased, and reached a peak temperature, which was 79°C. When the temperature was found to lower, 1.50 mmol of trimethoxy(4-vinylphenyl)silane (shown as "BS-1" in the table) used as a branching agent was added thereto, the resultant was stirred for 5 minutes, and 0.73 mmol of a tetraethoxysilane compound M-1 (the compound represented as (M-1) described above in <Compound [M] used in Modifying Step>; shown as "M-1" in the table) used as a coupling agent was added thereto, followed by stirring for another 5 minutes. Here, a stirring speed was 200 rpm. It was 7 minutes after reaching the peak temperature that the coupling agent was added.

To the resultant, 2.92 mmol of ethanol was added as a polymerization terminator to stop the reaction, and thus, a polymer solution containing a modified conjugated diene-based polymer was obtained.

To the thus obtained polymer solution, 0.64 g of 2,6-di-tert-butyl-4-hydroxytoluene was added as an antioxidant, the solvent was removed by steam stripping, and the resultant was vacuum dried to obtain a modified conjugated diene-based polymer (sample 29)

Physical properties are shown in Table 6 below.

### (Comparative Example 7) Modified Conjugated Diene-based Polymer (Sample 30)

A temperature-controllable autoclave having an internal volume of 5 L and equipped with a stirrer and a jacket was used as a reactor, and the reactor was charged with 1670 g of normal hexane, 83 g of styrene, 236 g of 1,3-butadiene, and 1.91 mmol of 2,2-bis(2-oloxalnyl)propane used as a polar material, from which impurities had been precedently removed, and polymerization was started by adding 2.55 mmol of n-butyllithium used as a polymerization initiator thereto when the temperature within the reactor was 58°C.

The temperature within the reactor increased immediately after starting the polymerization, and reached a peak temperature, and when the temperature was found to lower, the tetraethoxysilane compound M-1 (the compound represented as (M-1) described above in <Compound [M] used in Modifying Step>; shown as "M-1" in the table) was added as a coupling agent, followed by stirring for another 10 minutes. The reaction was stopped by adding 2.55 mmol of ethanol as a polymerization terminator, and thus, a polymer solution containing a modified conjugated diene-based polymer was obtained. To the thus obtained polymer solution, 0.64 g of 2,6-di-tert-butyl-4-hydroxytoluene was added as a stabilizer, the solvent was removed by steam stripping, and the resultant was vacuum dried to obtain a modified conjugated diene-based polymer (sample 30).

Physical properties are shown in Table 6 below.

### (Comparative Example B-1) Coupled Conjugated Diene-based Polymer (Sample B-1)

Two tank pressure vessels, each of which was a stirrer-equipped tank reactor having an internal volume of 10 L and a ratio (L/D) of an internal height (L) and a diameter (D) of 4.0, having an inlet at a bottom and an outlet at a top, and equipped with a stirrer and a temperature controlling jacket, were connected to each other as polymerization reactors.

1,3-Butadiene, from which a water content had been precedently removed, styrene and n-hexane were mixed under conditions of 18.6 g/min, 10.0 g/min and 175.2 g/min, respectively. In a static mixer provided in the middle of a pipe for supplying the thus obtained mixed solution to the inlet of the reactor, n-butyllithium to be used for residual impurity inactivation was added and mixed in an amount of 0.103 mmol/min, and the resultant was continuously supplied to the bottom of the reactor. Besides, 2,2-bis(2-oxolanyl)propane used as a polar material and n-butyllithium used as a polymerization initiator were supplied, at rates of respectively 0.081 mmol/min and 0.143 mmol/min, to the bottom of the first reactor in which materials were vigorously mixed by the stirrer, and the internal temperature of the reactor was kept at 67°C.

The thus obtained polymer solution was continuously taken out from the top of the first reactor to be continuously supplied to the bottom of the second reactor for continuing the reaction at 70°C, and the resultant was further supplied to a static mixer from the top of the second reactor.

When the polymerization reaction was stabilized, a small amount of a conjugated diene-based polymer solution prior to addition of a coupling agent was taken out, an antioxidant (BHT) was added thereto in an amount of 0.2 g per 100 g of the polymer, then the solvent was removed, and a Mooney viscosity at 110°C and various molecular weights were measured. The physical properties are shown in Table 4.

Next, to the polymer solution flowing out of the outlet of the reactor, trimethoxy(4-vinylphenyl)silane (shown as "BS-1" in the table) was added at a rate of 0.0190 mmol/min, and simultaneously, tetraethoxysilane (shown as "A" in the table) was continuously added at a rate of 0.0480 mmol/min, and the resultant was mixed by using a static mixer to perform a coupling reaction.

Here, a time until the addition of the coupling agent to the polymer solution flowing out of the outlet of the reactor was 4.8 min, the temperature was 68°C, and a difference between the temperature in the polymerizing step and the temperature until the addition of the coupling agent was 2°C. A small amount of a conjugated diene-based polymer solution after the coupling reaction was taken out, an antioxidant (BHT) was added thereto in an amount of 0.2 g per 100 g of the polymer, then the solvent was removed, and the amount of bound styrene (Physical Property 6) and the microstructure of a butadiene portion (the amount of 1,2-vinyl bond; Physical Property 7) were measured.

Measurement results are shown in Table 4.

Next, to the polymer solution resulting from the coupling reaction, an antioxidant (BHT) was continuously added in an amount of 0.2 g per 100 g of the polymer at 0.055 g/min (n-hexane solution) to complete the coupling reaction.

Simultaneously with the antioxidant, SRAE oil (JOMO Process NC 140, manufactured by JX Nippon Oil & Energy Corporation) was continuously added as a rubber softener in an amount of 25.0 g per 100 g of the polymer, and the resultant was mixed by using a static mixer. The solvent was removed by steam stripping, and thus, a coupled conjugated diene-based polymer (modified conjugated diene-based polymer) (sample B-1) was obtained.

Physical properties of the sample B-1 are shown in Table 4.

Although "BS-1" is shown in the column of "Branching Agent" of (Comparative Example B-1) in Table 4 below, it did not work as the branching agent when the addition method of this example was employed. In (Comparative Example B-1), the "BS-1" was added after consuming the monomer, and hence, it is assumed that there remained little monomer to be polymerized with a vinyl group of the "BS-1" after the active end was bonded to a methoxy group of the "BS-1". In other words, even if the "BS-1" was added, the "branching step" was not performed because of the absence of the monomer.

It was confirmed, based on the contracting factor of the (sample B-1), that branches were formed merely in a range of the number of functional groups of the coupling agent, and it is presumed that the increase in the branch number otherwise caused when one polymer includes both a main chain branch structure owing to the "BS-1" and a coupling structure did not occur.

In each of the polymer obtained prior to the addition of the "BS-1", the polymer obtained after the addition of the "BS-1", and the polymers obtained in the respective steps after the addition of the coupling agent, the structure of the coupled conjugated diene-based polymer was identified based on comparison between a molecular weight measured by GPC and a branch number measured by viscosity detector-equipped GPC.

### (Comparative Example B-2) Coupled Conjugated Diene-based Polymer (Sample B-2)

A coupled conjugated diene-based polymer (modified conjugated diene-based polymer) (sample B-2) not having main chain branching derived from a branching agent but having a 10-branched star polymer structure derived from a coupling agent was obtained in the same manner as in Comparative Example 1 except that a coupling agent represented by the following formula (Z-1) (shown as "Z-1" in the table) was used as the coupling agent, and that the amount thereof to be added was 0.0360 mmol/min.

Physical properties of the sample B-2 are shown in Table 4.

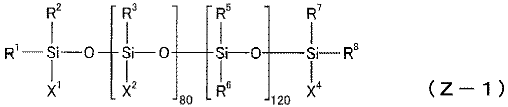

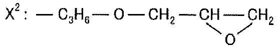

X¹, X⁴, R¹~R³, R⁵~R⁸: -CH₃

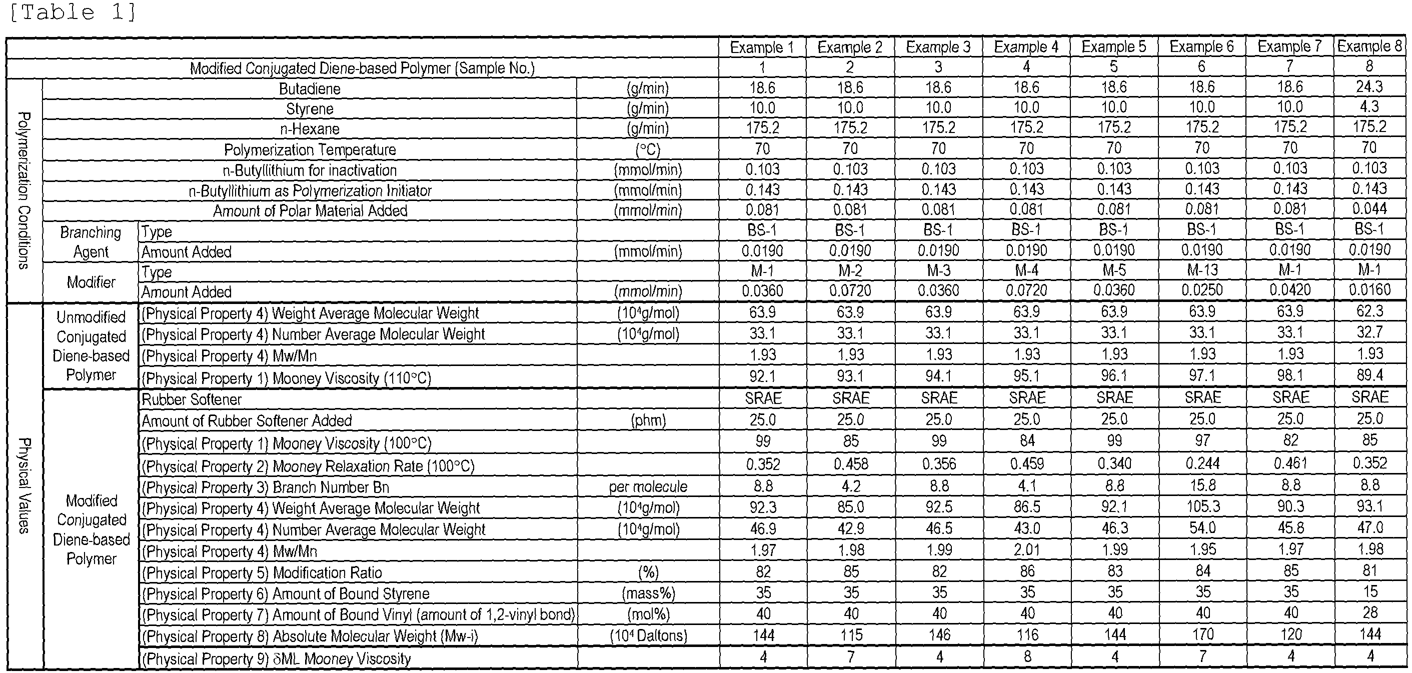

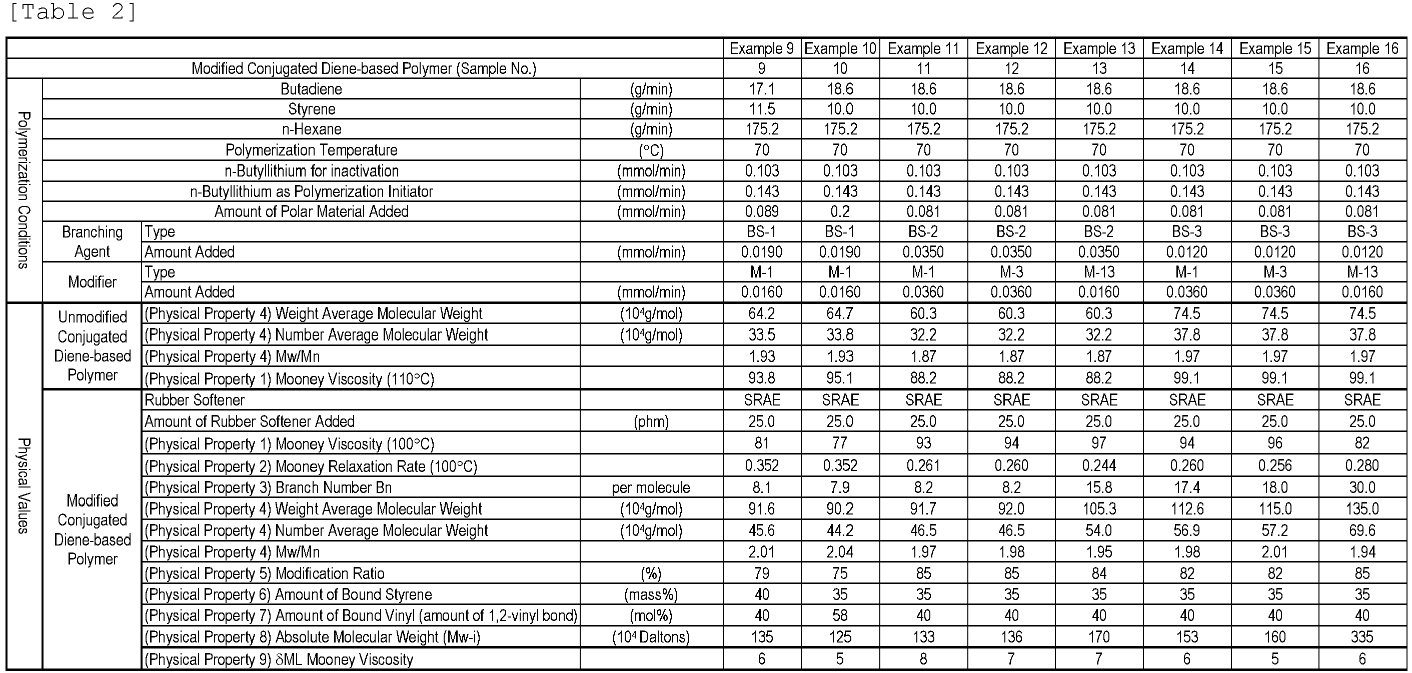

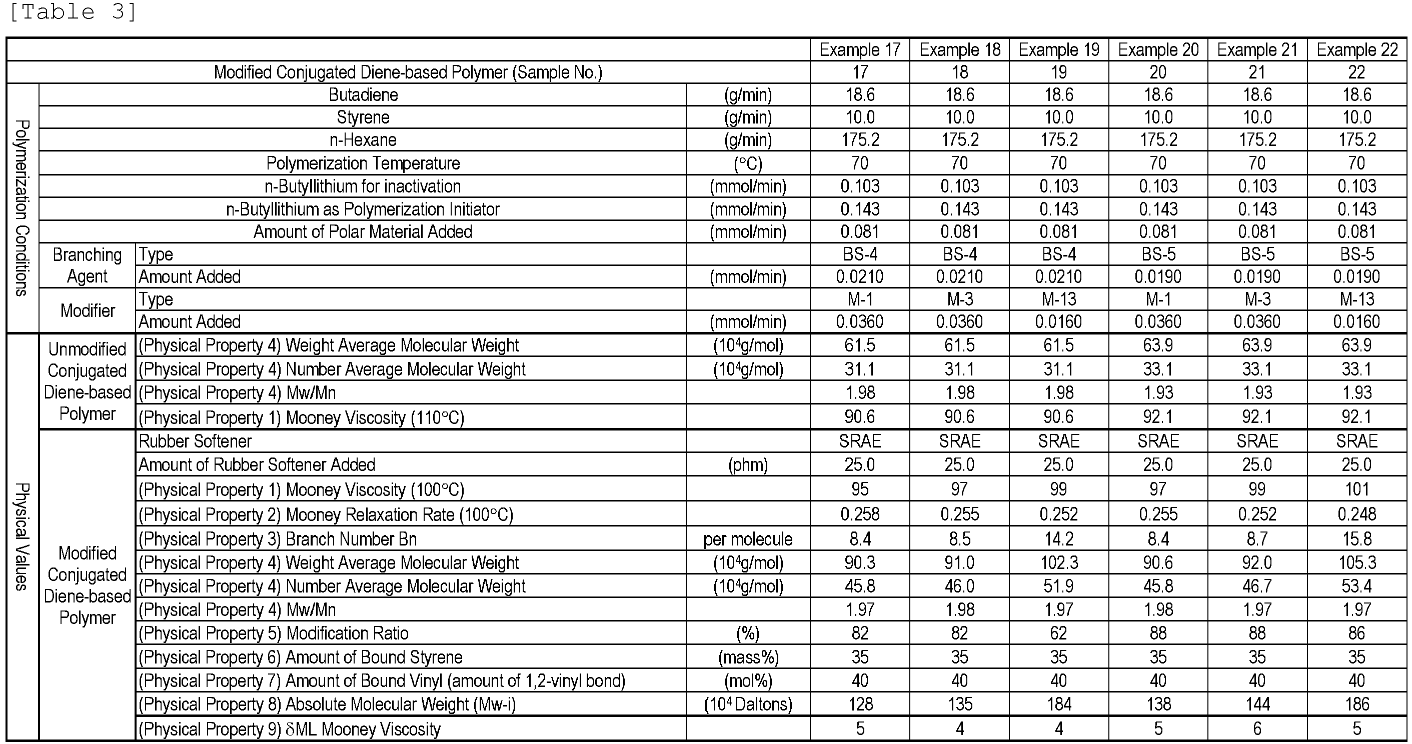

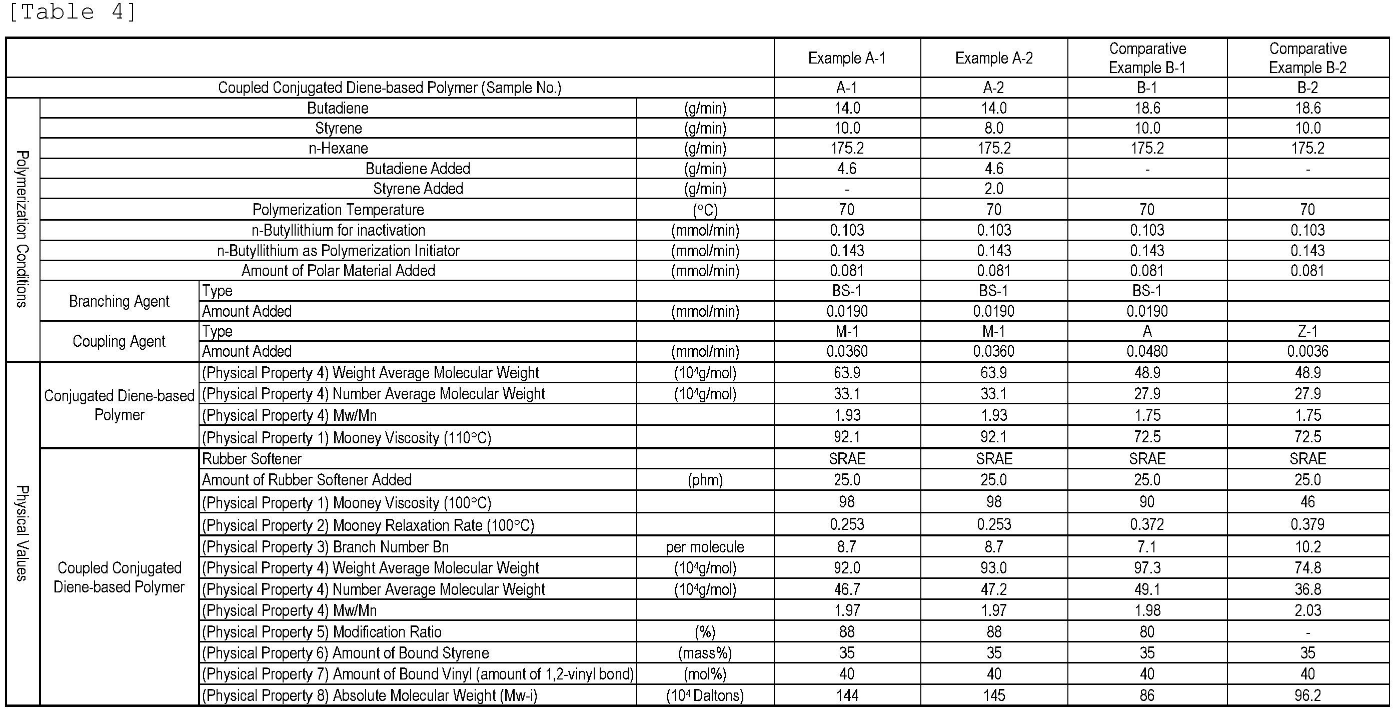

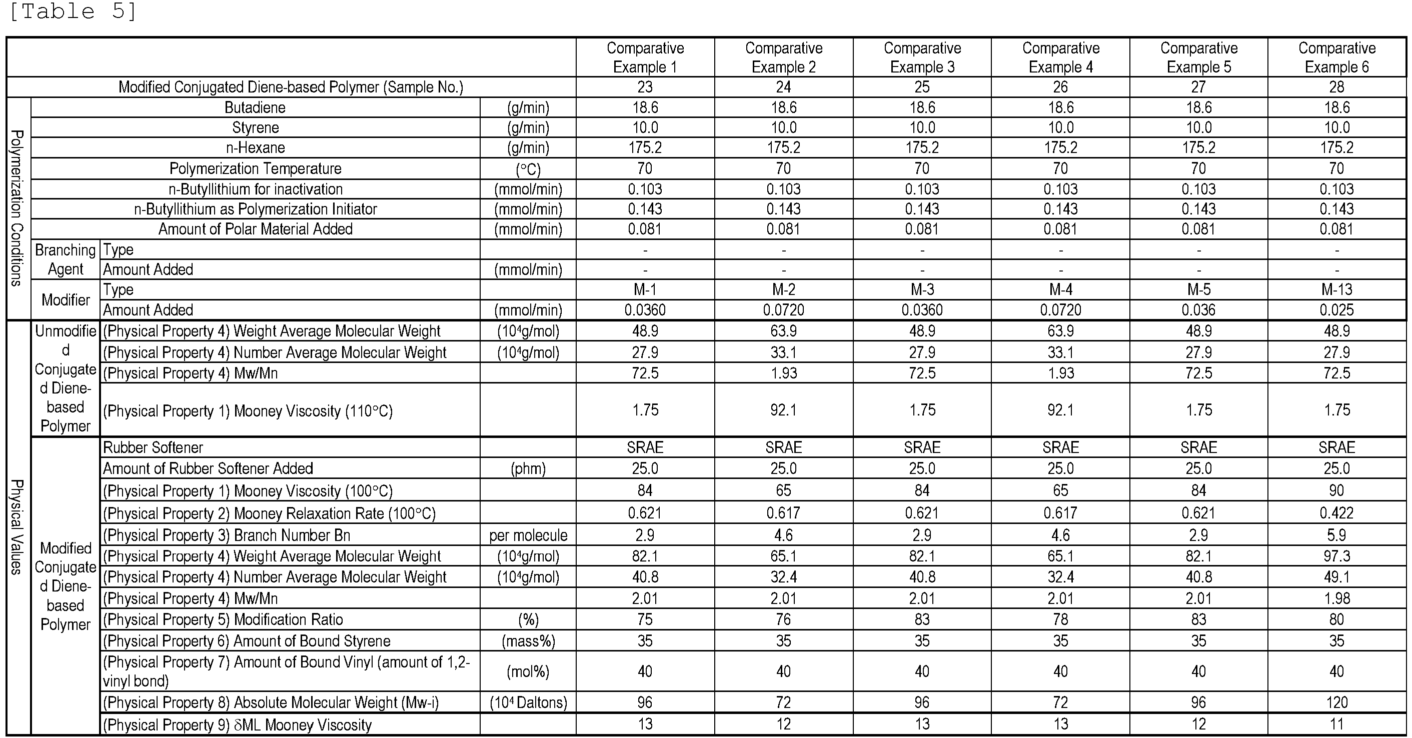

**[Table 6]**

| | | | | Example 23 | Comparative Example 7 |
|---|---|---|---|---|---|
| Modified Conjugated Diene-based Polymer (Sample No.) | | | | 29 | 30 |
| Polymerization Conditions | | | | | |
| | Butadiene | | (g) | 236 | 236 |
| | Styrene | | (g) | 83 | 83 |
| | Normal Hexane | | (g) | 1670 | 1670 |
| | Polymerization Start Temperature | | (°C) | 56 | 55 |
| | Polymerization Peak Temperature | | (°C) | 79 | 77 |
| | Polymerization Initiator | Type | | NBL | NBL |
| | | Amount Added | (mmol) | 2.92 | 2.92 |
| | Polar Material | Amount Added | (mmol) | 2.73 | 2.73 |
| | Branching Agent | Type | | BS-1 | - |
| | | Amount Added | (mmol) | 0.90 | - |
| | Modifier | Type | | M-1 | M-1 |
| | | Amount Added | (mmol) | 0.73 | 0.73 |
| Analysis Values | | | | | |
| | Mooney Viscosity ML₁₊₄ of Modified Conjugated Diene-based Polymer (100°C) | | | 95 | 775 |
| | Weight Average Molecular Weight (Mw) | | (×10⁻⁴) | 110.0 | 75.0 |
| | Number Average Molecular Weight (Mn) | | (×10⁻⁴) | 55.0 | 42.6 |
| | Mw/Mn | | | 2.00 | 1.76 |
| | Modification Ratio | | (%) | 79.0 | 82.0 |
| | Amount of Bound Styrene | | (mass%) | 27 | 27 |
| | Amount of Bound Vinyl (amount of 1,2-vinyl bond) | | (mol%) | 55 | 55 |
| | Glass Transition Temperature (Tg) | | (°C) | -26 | -26 |
| | δML Mooney Viscosity | | | 8 | 12 |

### (Examples 24 to 46, Examples a-1 to a-2, Comparative Examples 8 to 14, and Comparative Examples b-1 to b-2)

### Rubber Composition

The samples 1 to 30, the samples A-1 to A-2, and the samples B-1 to B-2 shown in Tables 1 to 6 were respectively used as raw material rubbers to obtain rubber compositions respectively containing the raw material rubbers in accordance with the following composition:

### (Rubber Component)

- Modified conjugated diene-based polymer (each of the samples 1 to 30, the samples A-1 to A-2 and the samples B-1 to B-2): 80 parts by mass (excluding a rubber softener)
- High cis-polybutadiene (trade name "UBEPOL BR150" manufactured by Ube Industries, Ltd.): 20 parts by mass

### (Blending Conditions)

The amount of each blending component to be added was indicated in parts by mass based on 100 parts by mass of the rubber component excluding a rubber softener.
- Silica 1 (trade name "Ultrasil 7000GR", manufactured by Evonik Degussa, nitrogen adsorption specific surface area: 170 m²/g): 50.0 parts by mass
- Silica 2 (trade name "Zeosil Premium 200MP" manufactured by Rhodia, nitrogen adsorption specific surface area: 220 m²/g): 25.0 parts by mass
- Carbon black (trade name "Seast KH (N339)", manufactured by Tokai Carbon Co., Ltd.): 5.0 parts by mass
- Silane modifier: (trade name "Si75", manufactured by Evonik Degussa, bis(triethoxysilylpropyl)disulfide): 6.0 parts by mass
- SRAE oil (trade name "Process NC140", manufactured by JX Nippon Oil & Energy Corporation):42.0 parts by mass (including an amount added as the rubber softener to be contained in each of the samples 1 to 30, the samples A-1 to A-2, and the samples B-1 to B-2)
- Zinc oxide: 2.5 parts by mass
- Stearic acid: 1.0 part by mass
- Anti-ageing agent (N-(1,3-dimethylbutyl)-N'-phenyl-p-phenylenediamine): 2.0 parts by mass
- Sulfur: 2.2 parts by mass
- Vulcanization accelerator 1 (N-cyclohexyl-2-benzothiazylsulfinamide): 1.7 parts by mass
- Vulcanization accelerator 2 (diphenylguanidine): 2.0 parts by mass

Total: 239.4 parts by mass

### (Kneading Method)

The above-described materials were kneaded by the following method to obtain a rubber composition. A closed kneader (having an internal volume of 0.3 L) equipped with a temperature controller was used to knead, as a first stage of kneading, the raw material rubber (each of the samples 1 to 30, the samples A-1 to 2, the samples B-1 to 2), the fillers (silica 1, silica 2 and carbon black), the silane modifier, the SRAE oil, zinc oxide and stearic acid under conditions of a filling ratio of 65% and a rotor rotation speed of 30 to 50 rpm. Here, the temperature of the closed kneader was controlled to obtain each rubber composition (compound) at a discharging temperature of 155 to 160°C.

Next, after cooling the compound obtained as described above to room temperature, as a second stage of the kneading, the anti-ageing agent was added thereto, and the resultant was kneaded again to improve dispersibility of the silica. Also in this case, the discharging temperature for the compound was adjusted to 155 to 160°C by the temperature control of the kneader.

After cooling, as a third stage of the kneading, sulfur and the vulcanization accelerators 1 and 2 were added, and the resultant was kneaded by an open roll set to 70°C.

Thereafter, the resultant was molded and vulcanized at 160°C for 20 minutes by a vulcanizing press.

The rubber compositions prior to the vulcanization, and the rubber compositions after the vulcanization were evaluated. Specifically, the evaluations were performed as described below.

Evaluation results are shown in Tables 7 to 12.

### [Evaluation of properties]

### (Evaluation 1) Mooney Viscosity of Compound

Each compound obtained after the second stage of the kneading and before the third stage of the kneading was used as a sample to measure a viscosity by using a Mooney viscometer in accordance with ISO 289 after preheating the compound at 130°C for 1 minute, and after rotating a rotor for 4 minutes at 2 rpm. The thus obtained viscosity was shown as an index obtained assuming that a result of Comparative Example 8 was 100. A smaller index indicates better processability.

### (Evaluation 2) Tensile Strength and Tensile Elongation

Tensile strength and tensile elongation were measured in accordance with a tensile test method according to JIS K6251, and were shown as indexes obtained assuming that results of Comparative Example 8 were 100. A larger index indicates better tensile strength and tensile elongation (fracture strength).

### (Evaluation 3) Abrasion Resistance

An Acron abrasion tester (manufactured by Yasuda Seiki Seisakusho, Ltd.) was used to measure an abrasion amount through 1000 rotations at a load of 44.4 N in accordance with JIS K6264-2, and results were shown as indexes obtained assuming that the result of Comparative Example 8 was 100. A larger index indicates better abrasion resistance.

### (Evaluation 4) Viscoelasticity Parameter

A viscoelasticity testing machine "ARES" manufactured by Rheometric Scientific, Inc. was used to measure a viscoelasticity parameter in a torsion mode. Each measurement value was shown as an index obtained assuming that a result obtained by the rubber composition of Comparative Example 6 was 100.

A tan δ measured at 0°C at a frequency of 10 Hz and strain of 1% was used as an index of wet skid performance. A larger index indicates better wet skid performance.

Besides, a tan δ measured at 50°C at a frequency of 10 Hz and strain of 3% was used as an index of fuel efficiency. A smaller index indicates higher fuel efficiency.

Besides, an elastic modulus (G') measured at 50°C at a frequency of 10 Hz and strain of 3% was used as an index of steering stability. A larger index indicates better steering stability.

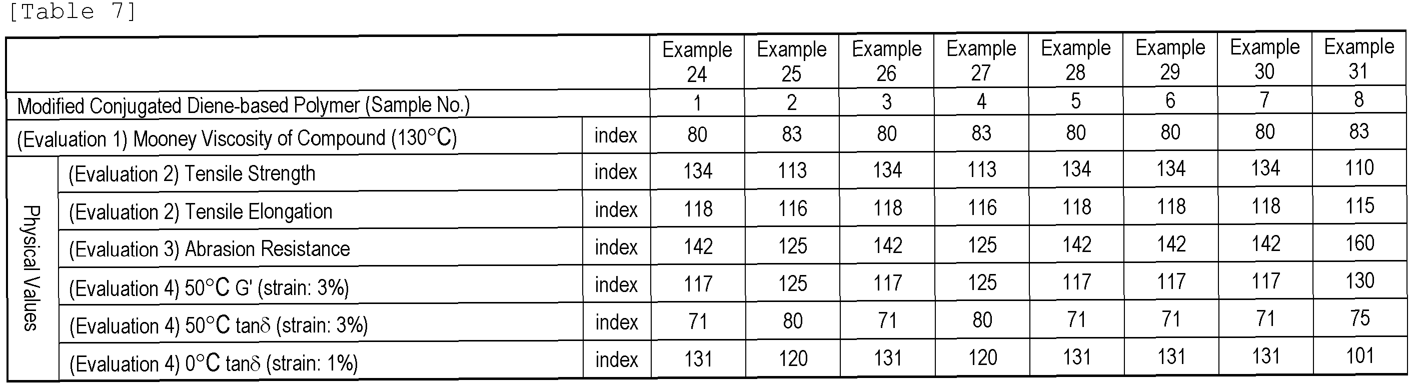

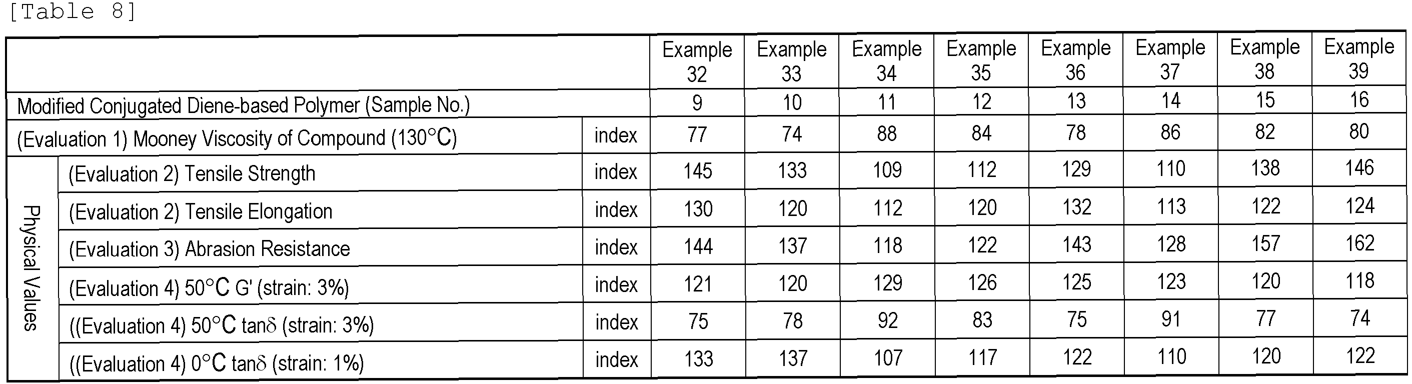

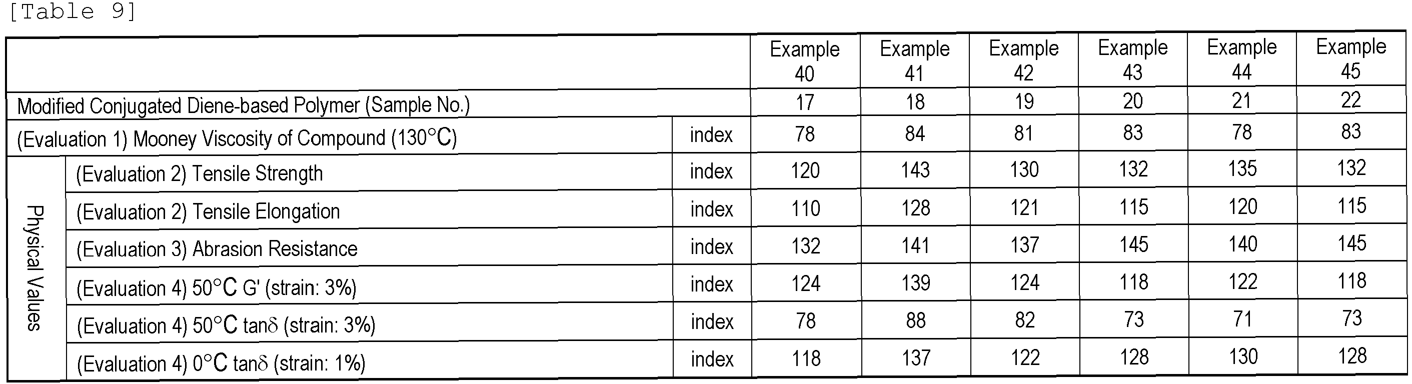

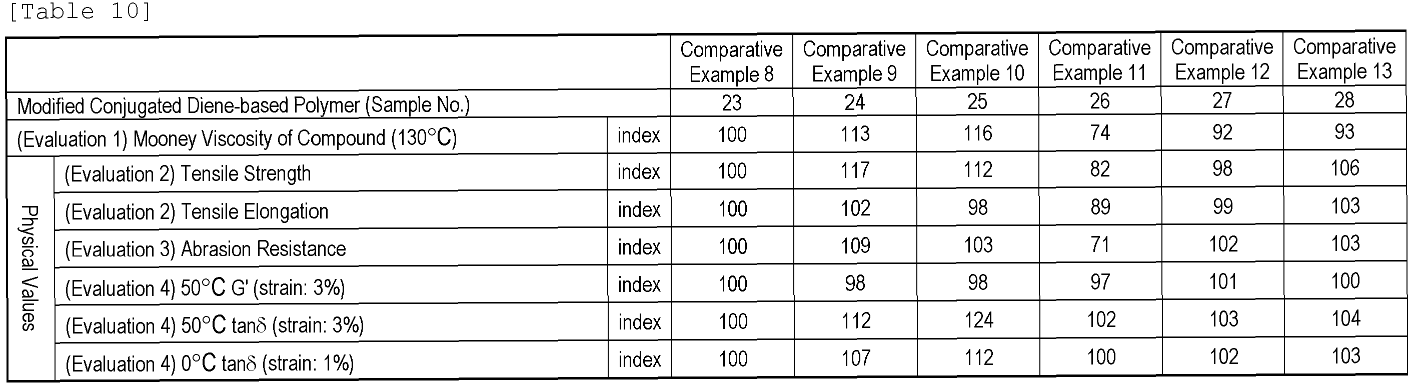

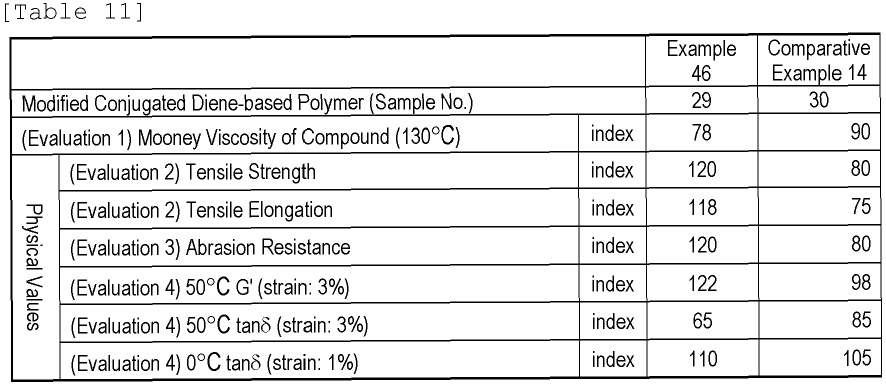

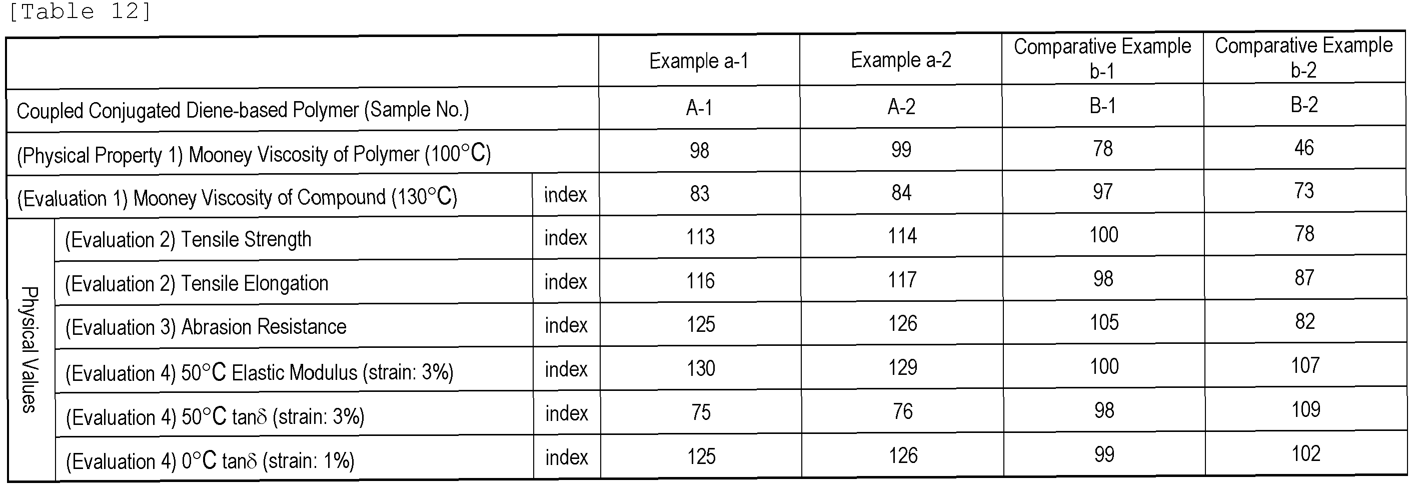

As shown in Tables 7 to 12, it was confirmed that Examples 24 to 46 and Examples a-1 to a-2 have, as compared with Comparative Examples 8 to 14 and Comparative Examples b-1 to b-2, a low Mooney viscosity of the compound when used for obtaining a vulcanizate and exhibit good processability, are excellent in abrasion resistance, steering stability and fracture strength when in the form of a vulcanizate, and are excellent in balance between a low hysteresis loss property and wet skid resistance.

### Industrial Applicability

A modified conjugated diene-based polymer obtained by a production method of the present invention is industrially applicable in the fields of tire treads, interiors and exteriors of vehicles, anti-vibration rubbers, belts, shoes, foam bodies, and various industrial products.

## Claims

1. A production method for a modified conjugated diene-based polymer, comprising:
a polymerizing step of obtaining a conjugated diene-based polymer having an active end by polymerizing or copolymerizing a conjugated diene compound or a conjugated diene compound and an aromatic vinyl compound with an alkali metal compound or an alkaline earth metal compound used as a polymerization initiator;
a branching step of introducing a branch structure by reacting a styrene derivative with the active end of the conjugated diene-based polymer; and
a modifying step of reacting the active end of the conjugated diene-based polymer formed after the branching step with a compound [M] having a total of two or more groups of a group "-C(R¹)=N-A¹" and/or a group "-N=C(R¹)-A¹", wherein R¹ represents a hydrogen atom or a hydrocarbyl group, and A¹ represents a monovalent group having an alkoxysilyl group,
wherein the styrene derivative is a compound represented by the following formula (1) and/or the following formula (2): 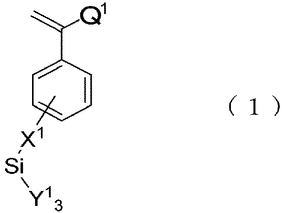 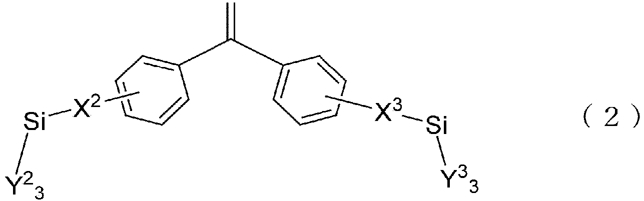
wherein Q¹ represents any one selected from the group consisting of a hydrogen atom, an alkyl group having 1 to 20 carbon atoms, and an aryl group having 6 to 20 carbon atoms, and may have a branch structure in a part thereof;
X¹, X² and X³ represent a single bond, or an organic group containing any one selected from the group consisting of carbon, hydrogen, nitrogen, sulfur, and oxygen; and
Y¹, Y², and Y³ represent any one selected from the group consisting of an alkyl group having 1 to 20 carbon atoms, an alkoxy group having 1 to 20 carbon atoms, and a halogen atom, are respectively independent, and may be the same or different.

2. The production method for the modified conjugated diene-based polymer according to claim 1,
wherein the compound [M] is a compound represented by the following formula (A): 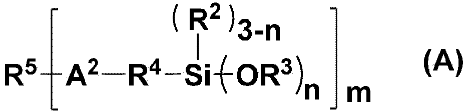
wherein R² and R³ each independently represent a hydrocarbyl group having 1 to 20 carbon atoms, R⁴ represents an alkanediyl group having 1 to 20 carbon atoms, and A² represents a group "*-C(R¹)=N-" or a group "*-N=C(R¹)-", wherein R¹ represents a hydrogen atom or a hydrocarbyl group, and a character "*" represents a point to attachment to R⁵;
R⁵ represents an m-valent hydrocarbyl group having 1 to 20 carbon atoms, or an m-valent group having 1 to 20 carbon atoms that has at least one atom selected from the group consisting of a nitrogen atom, an oxygen atom and a sulfur atom, and does not have active hydrogen;
n is an integer of 1 to 3, and m is an integer of 2 to 10; and
each of R², R³, R⁴, A² and n, each present in a plural number, may be the same or different.

3. The production method for the modified conjugated diene-based polymer according to claim 1 or 2, wherein Q¹ is a hydrogen atom, and Y¹ is any one selected from the group consisting of an alkyl group having 1 to 20 carbon atoms, an alkoxy group having 1 to 20 carbon atoms, and a halogen atom in the formula (1).

4. The production method for the modified conjugated diene-based polymer according to claim 1 or 2, wherein Q¹ is a hydrogen atom, and Y¹ is an alkoxy group having 1 to 20 carbon atoms, or a halogen atom in the formula (1).

5. The production method for the modified conjugated diene-based polymer according to claim 1 or 2, wherein Y² is an alkoxy group having 1 to 20 carbon atoms, or a halogen atom, and Y³ is an alkoxy group having 1 to 20 carbon atoms, or a halogen atom in the formula (2).

6. The production method for the modified conjugated diene-based polymer according to claim 1 or 2, wherein Q¹ is a hydrogen atom, and Y¹ is an alkoxy group having 1 to 20 carbon atoms in the formula (1).

7. The production method for the modified conjugated diene-based polymer according to claim 1 or 2, wherein Q¹ is a hydrogen atom, X¹ is a single bond, and Y¹ is an alkoxy group having 1 to 20 carbon atoms in the formula (1) .

8. The production method for the modified conjugated diene-based polymer according to claim 1 or 2, wherein X² is a single bond, Y² is an alkoxy group having 1 to 20 carbon atoms, or a halogen atom, X³ is a single bond, and Y³ is an alkoxy group having 1 to 20 carbon atoms, or a halogen atom in the formula (2).

9. A modified conjugated diene-based polymer that is a reaction product between:
a conjugated diene-based polymer having an active end and a branch structure; and
a compound [M] having a total of two or more groups of a group "-CR¹=N-A¹" and/or a group "-N=CR¹-A¹", wherein R¹ represents a hydrogen atom or a hydrocarbyl group, and A¹ represents a monovalent group having an alkoxysilyl group,
wherein the conjugated diene-based polymer having an active end and a branch structure is obtainable by reacting the active end of a conjugated diene-based polymer with a compound represented by the following formula (1) and/or the following formula (2): 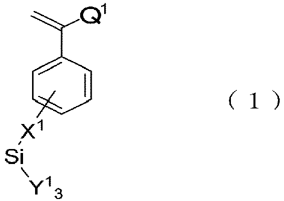 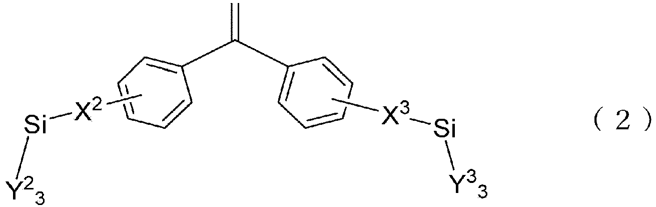
wherein Q¹ represents any one selected from the group consisting of a hydrogen atom, an alkyl group having 1 to 20 carbon atoms, and an aryl group having 6 to 20 carbon atoms, and may have a branch structure in a part thereof;
X¹, X² and X³ represent a single bond, or an organic group containing any one selected from the group consisting of carbon, hydrogen, nitrogen, sulfur, and oxygen; and
Y¹, Y², and Y³ represent any one selected from the group consisting of an alkyl group having 1 to 20 carbon atoms, an alkoxy group having 1 to 20 carbon atoms, and a halogen atom, are respectively independent, and may be the same or different.

10. The modified conjugated diene-based polymer according to claim 9, represented by the following formula (B): 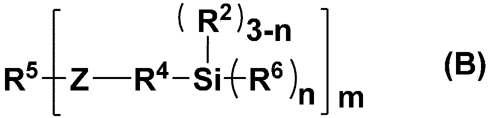
wherein R² represents a hydrocarbyl group having 1 to 20 carbon atoms, R⁶ represents a hydrocarbyloxy group having 1 to 20 carbon atoms, or a modified or unmodified branched conjugated diene-based polymer, R⁴ represents an alkanediyl group having 1 to 20 carbon atoms, and Z represents a group represented by the following formula (C) or (D);
R⁵ represents an m-valent hydrocarbyl group having 1 to 20 carbon atoms, or an m-valent group having 1 to 20 carbon atoms that has at least one atom selected from the group consisting of a nitrogen atom, an oxygen atom, and a sulfur atom, and does not have active hydrogen;
n represents an integer of 1 to 3, and m represents an integer of 2 to 10; and
each of R², R⁴, R⁶, Z and n, each present in a plural number, may be the same or different: 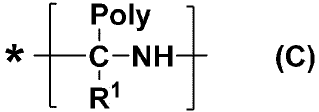 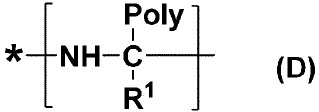
wherein R¹ represents a hydrogen atom or a hydrocarbyl group, Poly represents a modified or unmodified branched conjugated diene-based polymer, and a character "*" represents a point to attachment to R⁵.

11. A rubber composition, comprising:
a rubber component containing 10% by mass or more of the modified conjugated diene-based polymer according to claim 9 or 10; and
5.0 parts by mass or more and 150 parts by mass or less of a filler based on 100 parts by mass of the rubber component.

12. A production method for a rubber composition, comprising:
a step of obtaining a modified conjugated diene-based polymer by the production method according to any one of claims 1 to 8;
a step of obtaining a rubber component containing 10% by mass or more of the modified conjugated diene-based polymer; and
a step of obtaining a rubber composition by causing 5.0 parts by mass or more and 150 parts by mass or less of a filler to be contained based on 100 parts by mass of the rubber component.

13. A production method for a tire, comprising:
a step of obtaining a rubber composition by the production method for the rubber composition according to claim 12; and
a step of obtaining a tire by molding the rubber composition.

## Patentansprüche

1. Verfahren zur Herstellung eines modifizierten Polymers auf der Basis von konjugiertem Dien, umfassend:
einen Polymerisationsschritt zur Gewinnung eines Polymers auf Basis von konjugiertem Dien, welches ein aktives Ende aufweist, durch Polymerisieren oder Copolymerisieren einer konjugierten Dienverbindung oder einer konjugierten Dienverbindung und einer aromatischen Vinylverbindung mit wobei eine Alkalimetallverbindung oder Erdalkalimetallverbindung als Polymerisationsinitiator verwendet wird;
einen Verzweigungsschritt zur Einführung einer Zweigstruktur durch Umsetzen eines Styrolderivats mit dem aktiven Ende des Polymers auf Basis von konjugiertem Dien; und
einen Modifizierungsschritt des Umsetzens des aktiven Endes des nach dem Verzweigungsschritt gebildeten Polymers auf Basis von konjugiertem Dien mit einer Verbindung [M], die insgesamt zwei oder mehr Gruppen der Gruppe "-C(R¹)=N-A¹" und/oder der Gruppe "-N=C(R¹)-A¹" aufweist, wobei R¹ ein Wasserstoffatom oder eine Kohlenwasserstoffgruppe darstellt und A¹ eine einbindige Gruppe darstellt, die eine Alkoxysilylgruppe aufweist,
wobei das Styrolderivat eine Verbindung ist, die durch die folgende Formel (1) und/oder die folgende Formel (2) dargestellt wird: 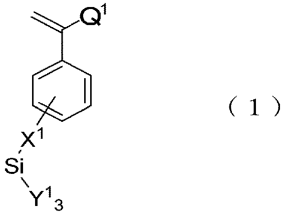 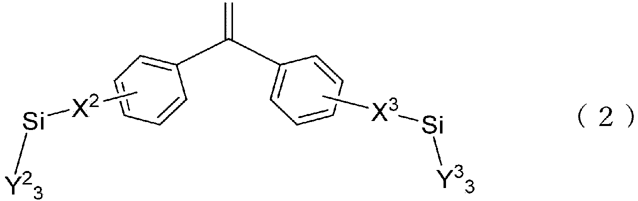
wobei Q¹ eines darstellt, ausgewählt aus der Gruppe bestehend aus einem Wasserstoffatom, einer Alkylgruppe mit 1 bis 20 Kohlenstoffatomen und einer Arylgruppe mit 6 bis 20 Kohlenstoffatomen, und in einem Teil davon eine Zweigstruktur aufweisen kann;
X¹, X² und X³ eine Einfachbindung oder eine organische Gruppe darstellen, die eines enthält, das aus der Gruppe ausgewählt ist, bestehend aus Kohlenstoff, Wasserstoff, Stickstoff, Schwefel und Sauerstoff; und
Y¹, Y² und Y³ eines darstellen, ausgewählt aus der Gruppe bestehend aus einer Alkylgruppe mit 1 bis 20 Kohlenstoffatomen, einer Alkoxygruppe mit 1 bis 20 Kohlenstoffatomen und einem Halogenatom, jeweils unabhängig sind und gleich oder verschieden sein können.

2. Verfahren zur Herstellung des modifizierten Polymers auf Basis von konjugiertem Dien nach Anspruch 1,
wobei die Verbindung [M] eine durch die folgende Formel (A) dargestellte Verbindung ist: 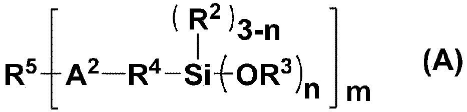
wobei R² und R³ jeweils unabhängig eine Kohlenwasserstoffgruppe mit 1 bis 20 Kohlenstoffatomen darstellen, R⁴ eine Alkandiylgruppe mit 1 bis 20 Kohlenstoffatomen darstellt und A² eine Gruppe "*-C(R¹)=N-" oder eine Gruppe "*-N=C(R¹)-" darstellt, wobei R¹ ein Wasserstoffatom oder eine Kohlenwasserstoffgruppe darstellt und das Zeichen "*" eine Bindungsstelle an R⁵ darstellt;
R⁵ eine m-bindige Kohlenwasserstoffgruppe mit 1 bis 20 Kohlenstoffatomen oder eine m-bindige Gruppe mit 1 bis 20 Kohlenstoffatomen ist, die mindestens ein Atom, ausgewählt aus der Gruppe bestehend aus einem Stickstoffatom, einem Sauerstoffatom und einem Schwefelatom, aufweist, und keinen aktiven Wasserstoff aufweist;
n eine ganze Zahl von 1 bis 3 ist und m ist eine ganze Zahl von 2 bis 10 ist; und
jedes von R², R³, R⁴, A² und n, jeweils in einer Mehrzahl vorliegend, gleich oder verschieden sein können.

3. Verfahren zur Herstellung des modifizierten Polymers auf Basis von konjugiertem Dien nach Anspruch 1 oder 2, wobei in der Formel (1) Q¹ ein Wasserstoffatom ist und Y1 eines ist, ausgewählt aus der Gruppe bestehend aus einer Alkylgruppe mit 1 bis 20 Kohlenstoffatomen, einer Alkoxygruppe mit 1 bis 20 Kohlenstoffatomen und einem Halogenatom.

4. Verfahren zur Herstellung des modifizierten Polymers auf Basis von konjugiertem Dien nach Anspruch 1 oder 2, wobei in der Formel (1) Q¹ ein Wasserstoffatom ist und Y1 eine Alkoxygruppe mit 1 bis 20 Kohlenstoffatomen oder ein Halogenatom ist.

5. Verfahren zur Herstellung des modifizierten Polymers auf Basis von konjugiertem Dien nach Anspruch 1 oder 2, wobei in der Formel (2) Y² eine Alkoxygruppe mit 1 bis 20 Kohlenstoffatomen oder ein Halogenatom ist und Y³ eine Alkoxygruppe mit 1 bis 20 Kohlenstoffatomen oder ein Halogenatom ist.

6. Verfahren zur Herstellung des modifizierten Polymers auf Basis von konjugiertem Dien nach Anspruch 1 oder 2, wobei in der Formel (1) Q¹ ein Wasserstoffatom ist und Y¹ eine Alkoxygruppe mit 1 bis 20 Kohlenstoffatomen ist.

7. Verfahren zur Herstellung des modifizierten Polymers auf Basis von konjugiertem Dien nach Anspruch 1 oder 2, wobei in der Formel (1) Q¹ ein Wasserstoffatom ist, X¹ eine Einfachbindung ist und Y¹ eine Alkoxygruppe mit 1 bis 20 Kohlenstoffatomen ist.

8. Verfahren zur Herstellung des modifizierten Polymers auf Basis von konjugiertem Dien nach Anspruch 1 oder 2, wobei in der Formel (2) X² eine Einfachbindung ist, Y² eine Alkoxygruppe mit 1 bis 20 Kohlenstoffatomen oder ein Halogenatom ist, X³ eine Einfachbindung ist und Y³ eine Alkoxygruppe mit 1 bis 20 Kohlenstoffatomen oder ein Halogenatom ist.

9. Modifiziertes Polymer auf Basis von konjugiertem Dien, wobei es sich um ein Reaktionsprodukt handelt zwischen:
einem Polymer auf Basis von konjugiertem Dien, welches ein aktives Ende und Zweigstruktur aufweist; und
einer Verbindung [M], die insgesamt zwei oder mehr Gruppen der Gruppe "-C(R¹)=N-A¹" und/oder der Gruppe "-N=C(R¹)-A¹" aufweist, wobei R¹ ein Wasserstoffatom oder eine Kohlenwasserstoffgruppe darstellt und A¹ eine einbindige Gruppe darstellt, die eine Alkoxysilylgruppe aufweist,
wobei das Polymer auf Basis von konjugiertem Dien, das ein aktives Ende und eine Verzweigungsstruktur aufweist, erhältlich ist durch Umsetzen des aktiven Endes eines Polymers auf Basis von konjugiertem Dien mit einer durch die folgende Formel (1) und/oder die folgende Formel (2) dargestellten Verbindung: 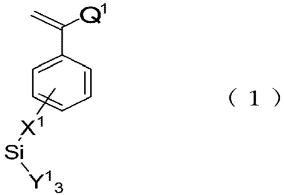 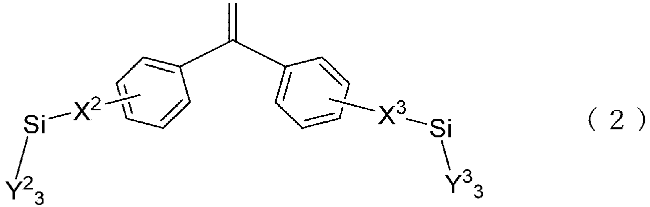
wobei Q¹ eines darstellt, ausgewählt aus der Gruppe bestehend aus einem Wasserstoffatom, einer Alkylgruppe mit 1 bis 20 Kohlenstoffatomen und einer Arylgruppe mit 6 bis 20 Kohlenstoffatomen, und in einem Teil davon eine Zweigstruktur aufweisen kann;
X¹, X² und X³ eine Einfachbindung oder eine organische Gruppe darstellen, die eines enthält, das aus der Gruppe ausgewählt ist, bestehend aus Kohlenstoff, Wasserstoff, Stickstoff, Schwefel und Sauerstoff; und
Y¹, Y² und Y³ eines darstellen, ausgewählt aus der Gruppe bestehend aus einer Alkylgruppe mit 1 bis 20 Kohlenstoffatomen, einer Alkoxygruppe mit 1 bis 20 Kohlenstoffatomen und einem Halogenatom, jeweils unabhängig sind und gleich oder verschieden sein können.

10. Modifiziertes Polymer auf Basis von konjugiertem Dien nach Anspruch 9, dargestellt durch die folgende Formel (B): 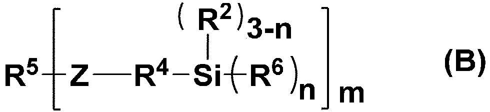
wobei R² eine Kohlenwassserstoffgruppe mit 1 bis 20 Kohlenstoffatomen darstellt, R⁶ eine Hydrocarbyloxygruppe mit 1 bis 20 Kohlenstoffatomen oder ein modifiziertes oder unmodifiziertes, verzweigtes Polymer auf Basis von konjugiertem Dien darstellt, R⁴ eine Alkandiylgruppe mit 1 bis 20 Kohlenstoffatomen darstellt und Z eine durch die folgende Formel (C) oder (D) dargestellte Gruppe darstellt;
R⁵ eine m-bindige Kohlenwasserstoffgruppe mit 1 bis 20 Kohlenstoffatomen oder eine m-bindige Gruppe mit 1 bis 20 Kohlenstoffatomen, die mindestens ein Atom, ausgewählt aus der Gruppe bestehend aus einem Stickstoffatom, einem Sauerstoffatom und einem Schwefelatom aufweist, und keinen aktiven Wasserstoff aufweist, darstellt;
n eine ganze Zahl von 1 bis 3 darstellt, und m eine ganze Zahl von 2 bis 10 darstellt; und
jedes von R², R⁴, R⁶, Z und n, jeweils in einer Mehrzahl vorliegend, gleich oder verschieden sein können: 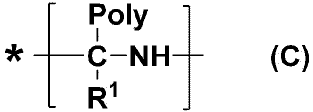 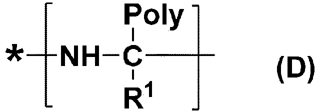
wobei R¹ ein Wasserstoffatom oder eine Kohlenwasserstoffgruppe darstellt, Poly ein modifiziertes oder unmodifiziertes verzweigtes Polymer auf Basis von konjugiertem Dien darstellt und das Zeichen "*" eine Bindungsstelle an R⁵ darstellt.

11. Kautschukzusammensetzung, umfassend:
eine Kautschukkomponente, die 10 Massen-% oder mehr des modifizierten Polymers auf Basis von konjugiertem Dien nach Anspruch 9 oder 10 enthält; und
5,0 Massenteile oder mehr und 150 Massenteile oder weniger eines Füllstoffs, bezogen auf 100 Massenteile der Kautschukkomponente.

12. Verfahren zur Herstellung einer Kautschukzusammensetzung, umfassend:
einen Schritt zur Gewinnung eines modifizierten Polymers auf Basis von konjugiertem Dien durch das Herstellungsverfahren nach einem der Ansprüche 1 bis 8;
einen Schritt zur Gewinnung einer Kautschukkomponente, die 10 Massen-% oder mehr des modifizierten Polymers auf Basis von konjugiertem Dien enthält; und
einen Schritt, bei dem eine Kautschukzusammensetzung erhalten wird, indem veranlasst wird, dass 5,0 Massenteile oder mehr und 150 Massenteile oder weniger eines Füllstoffs, bezogen auf 100 Massenteile der Kautschukkomponente, enthalten sind.

13. Verfahren zur Herstellung eines Reifens, umfassend:
einen Schritt zur Gewinnung einer Kautschukzusammensetzung durch das Verfahren zur Herstellung der Kautschukzusammensetzung nach Anspruch 12; und
einen Schritt zur Gewinnung eines Reifens durch Formen der Kautschukzusammensetzung.

## Revendications

1. Procédé de production d'un polymère à base de diène conjugué modifié, comprenant :
une étape de polymérisation consistant à obtenir un polymère à base de diène conjugué présentant une extrémité active par polymérisation ou copolymérisation d'un composé diène conjugué ou d'un composé diène conjugué et d'un composé vinyle aromatique avec un composé de métal alcalin ou un composé de métal alcalino-terreux utilisé comme initiateur de polymérisation ;
une étape de ramification consistant à introduire une structure ramifiée par réaction d'un dérivé de styrène avec l'extrémité active du polymère à base de diène conjugué ; et
une étape de modification consistant à faire réagir l'extrémité active du polymère à base de diène conjugué formée après l'étape de ramification avec un composé [M] présentant un total de deux groupes ou plus d'un groupe « -C(R¹)=N-A¹ » et/ou d'un groupe « - N=C(R¹)-A¹ », dans lequel R¹ représente un atome d'hydrogène ou un groupe hydrocarbyle, et A¹ représente un groupe monovalent présentant un groupe alcoxysilyle,
dans lequel le dérivé de styrène est un composé représenté par la formule (1) suivante et/ou la formule (2) suivante : 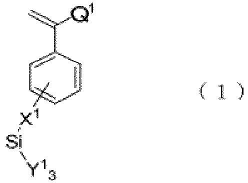 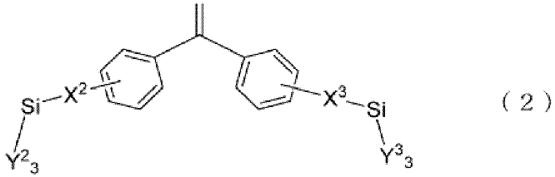
dans lequel Q¹ représente l'un quelconque choisi dans le groupe constitué d'un atome d'hydrogène, d'un groupe alkyle présentant 1 à 20 atomes de carbone, et d'un groupe aryle présentant 6 à 20 atomes de carbone, et peut présenter une structure ramifiée dans une partie de celui-ci ;
X¹, X² et X³ représentent une liaison simple, ou un groupe organique contenant l'un quelconque choisi dans le groupe constitué du carbone, de l'hydrogène, de l'azote, du soufre et de l'oxygène ; et
Y¹, Y² et Y³ représentent l'un quelconque choisi dans le groupe constitué d'un groupe alkyle présentant 1 à 20 atomes de carbone, d'un groupe alcoxy présentant 1 à 20 atomes de carbone, et d'un atome d'halogène, sont respectivement indépendants, et peuvent être identiques ou différents.

2. Procédé de production du polymère à base de diène conjugué modifié selon la revendication 1,
dans lequel le composé [M] est un composé représenté par la formule (A) suivante : 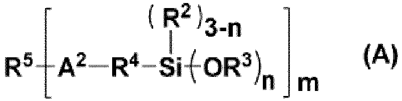
dans lequel R² et R³ représentent chacun indépendamment un groupe hydrocarbyle présentant 1 à 20 atomes de carbone, R⁴ représente un groupe alcanediyle présentant 1 à 20 atomes de carbone, et A² représente un groupe « *-C(R⁴)=N- » ou un groupe « *-N=C(R⁴)- », dans lequel R¹ représente un atome d'hydrogène ou un groupe hydrocarbyle, et un caractère « * » représente un point de fixation à R⁵ ;
R⁵ représente un groupe hydrocarbyle m-valent présentant 1 à 20 atomes de carbone, ou un groupe m-valent présentant 1 à 20 atomes de carbone qui présente au moins un atome choisi dans le groupe constitué d'un atome d'azote, d'un atome d'oxygène et d'un atome de soufre, et ne présente pas d'hydrogène actif ;
n est un nombre entier de 1 à 3, et m est un nombre entier de 2 à 10 ; et
chacun de R², R³, R⁴, A² et n, chacun présent en un nombre pluriel, peuvent être identiques ou différents.

3. Procédé de production du polymère à base de diène conjugué modifié selon la revendication 1 ou 2, dans lequel Q¹ est un atome d'hydrogène, et Y¹ est l'un quelconque choisi dans le groupe constitué d'un groupe alkyle présentant 1 à 20 atomes de carbone, d'un groupe alcoxy présentant 1 à 20 atomes de carbone, et d'un atome d'halogène dans la formule (1).

4. Procédé de production du polymère à base de diène conjugué modifié selon la revendication 1 ou 2, dans lequel Q¹ est un atome d'hydrogène, et Y¹ est un groupe alcoxy présentant 1 à 20 atomes de carbone, ou un atome d'halogène dans la formule (1).

5. Procédé de production du polymère à base de diène conjugué modifié selon la revendication 1 ou 2, dans lequel Y² est un groupe alcoxy présentant 1 à 20 atomes de carbone, ou un atome d'halogène, et Y³ est un groupe alcoxy présentant 1 à 20 atomes de carbone, ou un atome d'halogène dans la formule (2).

6. Procédé de production du polymère à base de diène conjugué modifié selon la revendication 1 ou 2, dans lequel Q¹ est un atome d'hydrogène, et Y¹ est un groupe alcoxy présentant 1 à 20 atomes de carbone dans la formule (1).

7. Procédé de production du polymère à base de diène conjugué modifié selon la revendication 1 ou 2, dans lequel Q¹ est un atome d'hydrogène, X¹ est une liaison simple, et Y¹ est un groupe alcoxy présentant 1 à 20 atomes de carbone dans la formule (1).

8. Procédé de production du polymère à base de diène conjugué modifié selon la revendication 1 ou 2, dans lequel X² est une liaison simple, Y² est un groupe alcoxy présentant 1 à 20 atomes de carbone, ou un atome d'halogène, X³ est une liaison simple, et Y³ est un groupe alcoxy présentant 1 à 20 atomes de carbone, ou un atome d'halogène dans la formule (2).

9. Polymère à base de diène conjugué modifié qui est un produit de réaction entre :
un polymère à base de diène conjugué présentant une extrémité active et une structure ramifiée ; et
un composé [M] présentant un total de deux groupes ou plus d'un groupe « -CR¹=N-A¹ » et/ou d'un groupe « -N=CR¹-A¹ », dans lequel R¹ représente un atome d'hydrogène ou un groupe hydrocarbyle, et A¹ représente un groupe monovalent présentant un groupe alcoxysilyle,
dans lequel le polymère à base de diène conjugué présentant une extrémité active et une structure ramifiée peut être obtenu en faisant réagir l'extrémité active d'un polymère à base de diène conjugué avec un composé représenté par la formule (1) suivante et/ou la formule (2) suivante : 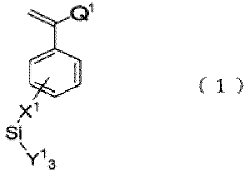 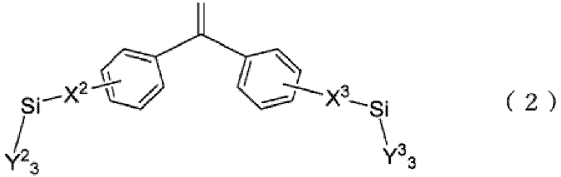
dans lequel Q¹ représente l'un quelconque choisi dans le groupe constitué d'un atome d'hydrogène, d'un groupe alkyle présentant 1 à 20 atomes de carbone, et d'un groupe aryle présentant 6 à 20 atomes de carbone, et peut présenter une structure ramifiée dans une partie de celui-ci ;
X¹, X² et X³ représentent une liaison simple, ou un groupe organique contenant l'un quelconque choisi dans le groupe constitué du carbone, de l'hydrogène, de l'azote, du soufre et de l'oxygène ; et
Y¹, Y² et Y³ représentent l'un quelconque choisi dans le groupe constitué d'un groupe alkyle présentant 1 à 20 atomes de carbone, d'un groupe alcoxy présentant 1 à 20 atomes de carbone, et d'un atome d'halogène, sont respectivement indépendants, et peuvent être identiques ou différents.

10. Polymère à base de diène conjugué modifié selon la revendication 9, représenté par la formule (B) suivante : 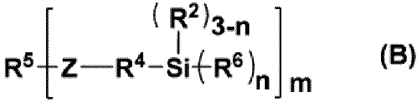
dans lequel R² représente un groupe hydrocarbyle présentant 1 à 20 atomes de carbone, R⁶ représente un groupe hydrocarbyloxy présentant 1 à 20 atomes de carbone, ou un polymère à base de diène conjugué ramifié modifié ou non modifié, R⁴ représente un groupe alcanediyle présentant 1 à 20 atomes de carbone, et Z représente un groupe représenté par la formule (C) ou (D) suivante ;
R⁵ représente un groupe hydrocarbyle m-valent présentant 1 à 20 atomes de carbone, ou un groupe m-valent présentant 1 à 20 atomes de carbone qui présente au moins un atome choisi dans le groupe constitué d'un atome d'azote, d'un atome d'oxygène et d'un atome de soufre, et ne présente pas d'hydrogène actif ;
n représente un nombre entier de 1 à 3, et m représente un nombre entier de 2 à 10 ; et
chacun de R², R⁴, R⁶, Z et n, chacun présent en un nombre pluriel, peuvent être identiques ou différents : 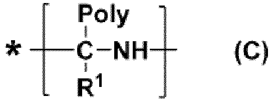 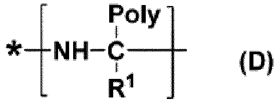
dans lequel R¹ représente un atome d'hydrogène ou un groupe hydrocarbyle, Poly représente un polymère à base de diène conjugué ramifié modifié ou non modifié, et un caractère « * » représente un point de fixation à R⁵.

11. Composition de caoutchouc, comprenant :
un composant de caoutchouc contenant 10 % en masse ou plus du polymère à base de diène conjugué modifié selon la revendication 9 ou 10 ; et
5,0 parties en masse ou plus et 150 parties en masse ou moins d'une charge sur la base de 100 parties en masse du composant de caoutchouc.

12. Procédé de production d'une composition de caoutchouc, comprenant :
une étape d'obtention d'un polymère à base de diène conjugué modifié par le procédé de production selon l'une quelconque des revendications 1 à 8 ;
une étape d'obtention d'un composant de caoutchouc contenant 10 % en masse ou plus du polymère à base de diène conjugué modifié ; et
une étape d'obtention d'une composition de caoutchouc en amenant 5,0 parties en masse ou plus et 150 parties en masse ou moins d'une charge à être contenue sur la base de 100 parties en masse du composant de caoutchouc.

13. Procédé de production d'un pneumatique, comprenant :
une étape d'obtention d'une composition de caoutchouc par le procédé de production de la composition de caoutchouc selon la revendication 12 ; et
une étape d'obtention d'un pneumatique par moulage de la composition de caoutchouc.
